# EUROPEAN PATENT APPLICATION

(11) **EP 4 811 280 A1**
(43) Date of publication of application: **23.09.2026**
(21) Application number: 25793300.2
(22) Date of filing: 17.03.2025
(51) Int. Cl.: G06T 7/00

(54) **IMAGE ANOMALY DETECTION METHOD AND APPARATUS, COMPUTER DEVICE, AND STORAGE MEDIUM**

(30) Priority: 26.04.2024 CN 202410518003
(71) Applicant: Tencent Technology (Shenzhen) Company Limited, Shenzhen, Guangdong 518057 (CN)
(72) Inventor: GAO, Binbin, Shenzhen, Guangdong 518057 (CN)
(74) Representative: AWA Sweden AB
(86) International application number: PCT/CN2025/082855
(87) International publication number: WO 2025/223102

(57) **Abstract**

An image anomaly detection method, comprising: encoding an original image feature of an image to be detected to obtain an encoded detection feature(202);encoding an original prompt feature associated with said image to obtain an encoded prompt feature (204);performing combined decoding processing in at least one layer on the basis of the encoded detection feature and the encoded prompt feature to obtain an output combined decoded feature, and in the combined decoding processing in each layer, performing attention feature extraction on a target encoded detection feature and a target encoded prompt feature input by the layer to obtain an encoded prompt feature output by the layer, and performing attention feature extraction on the encoded prompt feature output by the layer and the target encoded detection feature to obtain an encoded detection feature output by the layer(206);obtaining an image reconstruction feature on the basis of the combined decoded feature(208);and obtaining an anomaly detection result on the basis of a reconstruction difference between the image reconstruction feature and the original image feature (210).

## Description

### RELATED APPLICATION

The present disclosure claims priority to Chinese Patent Application No. 2024105180038, entitled "IMAGE ANOMALY DETECTION METHOD AND APPARATUS, COMPUTER DEVICE, AND STORAGE MEDIUM" filed on April 26, 2024.

### FIELD OF THE TECHNOLOGY

The present disclosure relates to the field of computer technologies, and in particular, to an image anomaly detection method and apparatus, a computer device, a storage medium, and a computer program product, and an image anomaly detection model processing method and apparatus, a computer device, a storage medium, and a computer program product.

### BACKGROUND OF THE DISCLOSURE

With the development of computer technologies, computer vision is more widely applied to various fields, including self-driving, medical image analysis, retail services, security protection, and games, and various tasks such as image classification, detection, semantic segmentation, face recognition, and image anomaly detection are implemented, which greatly improves image processing efficiency. Image anomaly detection aims to be configured for recognizing an anomalous image, and has relatively high research significance and application value in fields such as industrial appearance defect detection, medical image analysis, and hyperspectral image processing.

However, in current image anomaly detection processing, because an anomalous region in an image usually has relatively high consistency with a neighboring region, a normal region and the anomalous region in the image cannot be effectively distinguished, resulting in relatively low accuracy of image anomaly detection.

### SUMMARY

According to various embodiments provided in the present disclosure, an image anomaly detection method and apparatus, a computer device, a computer-readable storage medium, and a computer program product, and an image anomaly detection model processing method and apparatus, a computer device, a storage medium, and a computer program product are provided.

According to an aspect, the present disclosure provides an image anomaly detection method, executable by a computer device. The method includes:
obtaining an image; extracting an original image feature of the image; and encoding the original image feature to obtain an encoded detection feature of the image;
determining an original prompt feature from a reference image associated with the image, and encoding the original prompt feature to obtain an encoded prompt feature, the reference image comprising no anomaly;
performing combined decoding processing based on the encoded detection feature and the encoded prompt feature, through at least one layer sequentially in an image anomaly detection model, to obtain a combined decoding feature, comprising:
through a layer of the at least one layer,
   performing attention feature extraction on an input encoded detection feature and an input encoded prompt feature, to obtain an output encoded prompt feature; and
   performing attention feature extraction on the output encoded prompt feature and the input encoded detection feature, to obtain an output encoded detection feature;
extracting a reconstruction feature of the image from the combined decoding feature; and
determining a feature difference between the reconstruction feature and the original image feature to obtain an anomalous detection result of the image.

According to a second aspect, the present disclosure further provides an image anomaly detection apparatus. The apparatus includes:
an image processing module, configured to obtain an image; extract an original image feature of the image; and encode the original image feature to obtain an encoded detection feature of the image;
a prompt feature obtaining module, configured to determine an original prompt feature from a reference image associated with the image, and encode the original prompt feature to obtain an encoded prompt feature, the reference image comprising no anomaly;
a combined decoding processing module, configured to perform combined decoding processing based on the encoded detection feature and the encoded prompt feature, through at least one layer sequentially in an image anomaly detection model, to obtain a combined decoding feature, wherein through a layer of the at least one layer, attention feature extraction is performed on an input encoded detection feature and an input encoded prompt feature, to obtain an output encoded prompt feature; and attention feature extraction is performed on the output encoded prompt feature and the input encoded detection feature, to obtain an output encoded detection feature;
a reconstruction feature obtaining module, configured to extract a reconstruction feature of the image from the combined decoding feature; and
a feature difference processing module, configured to determine a feature difference between the reconstruction feature and the original image feature to obtain an anomalous detection result of the image.

According to a third aspect, the present disclosure further provides a computer device. The computer device includes a memory and a processor. The memory has computer-readable instructions stored therein, and the processor, when executing the computer-readable instructions, implements the operations of the image anomaly detection method.

According to a fourth aspect, the present disclosure further provides a computer-readable storage medium. The computer-readable storage medium has computer-readable instructions stored therein. When the computer-readable instructions are executed by a processor, the operations of the image anomaly detection method are implemented.

According to a fifth aspect, the present disclosure further provides a computer program product. The computer program product includes computer-readable instructions. When the computer-readable instructions are executed by a processor, the operations of the image anomaly detection method are implemented.

According to a sixth aspect, the present disclosure provides an image anomaly detection model processing method, executable by a computer device. The method includes:
obtaining a normal sample image, and a reference sample image and an anomalous sample image that are associated with the normal sample image;
separately performing feature extraction on the normal sample image, the reference sample image, and the anomalous sample image, to obtain a normal image feature of the normal sample image, a reference image feature of the reference sample image, and an anomalous image feature of the anomalous sample image;
separately encoding the normal image feature, the reference image feature, and the anomalous image feature through the image anomaly detection model, to obtain an encoded normal sample feature of the normal sample image, an encoded prompt sample feature of the reference sample image, and an encoded anomalous sample feature of the anomalous sample image;
performing combined decoding processing based on the encoded normal sample feature and the encoded prompt sample feature through at least one layer sequentially in the image anomaly detection model, to output a first combined decoding feature, and extracting a sample reconstruction feature for the normal sample image from the first combined decoding feature;
performing combined decoding processing based on the encoded anomalous sample feature and the encoded prompt sample feature through at least one layer sequentially in the image anomaly detection model, to output a second combined decoding feature, and extracting a sample restoration feature for the anomalous sample image from the second combined decoding feature; and
updating parameters of the image anomaly detection model based on the sample reconstruction feature, the sample restoration feature, and the normal image feature, to obtain a trained image anomaly detection model, the trained image anomaly detection model being configured for performing image anomaly detection on an input image.

According to a seventh aspect, the present disclosure further provides an image anomaly detection model processing apparatus. The apparatus includes:
a sample image obtaining module, configured to obtain a normal sample image, and a reference sample image and an anomalous sample image that are associated with the normal sample image;
a sample feature extraction module, configured to separately perform feature extraction on the normal sample image, the reference sample image, and the anomalous sample image, to obtain a normal image feature of the normal sample image, a reference image feature of the reference sample image, and an anomalous image feature of the anomalous sample image;
a sample feature encoding module, configured to separately encode the normal image feature, the reference image feature, and the anomalous image feature through the image anomaly detection model, to obtain an encoded normal sample feature of the normal sample image, an encoded prompt sample feature of the reference sample image, and an encoded anomalous sample feature of the anomalous sample image;
a normal sample reconstruction module, configured to perform combined decoding processing based on the encoded normal sample feature and the encoded prompt sample feature through at least one layer sequentially in the image anomaly detection model, to output a first combined decoding feature, and extract a sample reconstruction feature for the normal sample image from the first combined decoding feature;
an anomalous sample restoration module, configured to perform combined decoding processing based on the encoded anomalous sample feature and the encoded prompt sample feature through at least one layer sequentially in the image anomaly detection model, to output a second combined decoding feature, and extract a sample restoration feature for the anomalous sample image from the second combined decoding feature; and
a model updating module, configured to update parameters of the image anomaly detection model based on the sample reconstruction feature, the sample restoration feature, and the normal image feature, to obtain a trained image anomaly detection model, the trained image anomaly detection model being configured for performing image anomaly detection on an input image.

According to an eighth aspect, the present disclosure further provides a computer device. The computer device includes a memory and a processor. The memory has computer-readable instructions stored therein, and the processor, when executing the computer-readable instructions, implements the operations of the image anomaly detection model processing method.

According to a ninth aspect, the present disclosure further provides a computer-readable storage medium. The computer-readable storage medium has computer-readable instructions stored therein. When the computer-readable instructions are executed by a processor, the operations of the image anomaly detection model processing method are implemented.

According to a tenth aspect, the present disclosure further provides a computer program product, The computer program product includes computer-readable instructions. When the computer-readable instructions are executed by a processor, the operations of the image anomaly detection model processing method are implemented.

Details of one or more embodiments of the present disclosure are provided in the subsequent accompanying drawings and descriptions. Other features and advantages of the present disclosure become clearer from the specification, the accompanying drawings, and the claims.

### BRIEF DESCRIPTION OF THE DRAWINGS

To describe the technical solutions in embodiments of the present disclosure more clearly, the following briefly introduces the accompanying drawings required for describing the embodiments or the related art. Apparently, the accompanying drawings in the following description show only embodiments of the present disclosure, and a person of ordinary skill in the art may still derive other accompanying drawings from the disclosed accompanying drawings without creative efforts.
FIG. 1 is a diagram of an application environment of an image anomaly detection method in some embodiments.
FIG. 2 is a schematic flowchart of an image anomaly detection method in some embodiments.
FIG. 3 is a schematic flowchart of an image anomaly detection method in another embodiment.
FIG. 4 is a schematic flowchart of feature extraction and model processing in some embodiments.
FIG. 5 is a schematic flowchart of combined decoding processing in some embodiments.
FIG. 6 is a schematic flowchart of combined decoding processing at a layer in some embodiments.
FIG. 7 is a schematic flowchart of an encoded prompt feature in some embodiments.
FIG. 8 is a schematic flowchart of obtaining an encoded detection feature in some embodiments.
FIG. 9 is a schematic flowchart of model updating in some embodiments.
FIG. 10 is a schematic flowchart of an image anomaly detection model processing method in some embodiments.
FIG. 11 is a framework diagram of image anomaly detection in some embodiments.
FIG. 12 is a comparison table of detection results of different image anomaly detection methods in some embodiments.
FIG. 13 is a structural block diagram of an image anomaly detection apparatus in some embodiments.
FIG. 14 is a structural block diagram of an image anomaly detection model processing apparatus in some embodiments.
FIG. 15 is a diagram of an inner structure of a computer device in some embodiments.

### DESCRIPTION OF EMBODIMENTS

The technical solutions in embodiments of the present disclosure are clearly and completely described in the following with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without creative efforts shall fall within the protection of the present disclosure.

To make the objectives, technical solutions, and advantages of the present disclosure clearer and more comprehensible, the following further describes the present disclosure in detail with reference to the accompanying drawings and embodiments. The specific embodiments described herein are only used for explaining the present disclosure, and are not used for limiting the present disclosure. The term, involved in the following description, "some embodiments" describes subsets of all possible embodiments, but "some embodiments" may be the same subset or different subsets of all the possible embodiments and may be combined with each other without conflict.

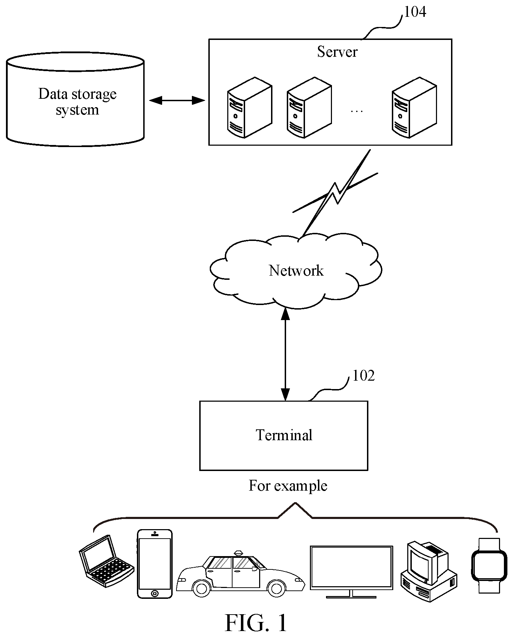

An image anomaly detection method provided in the embodiments of the present disclosure may be applied to an application environment shown in FIG. 1. A terminal 102 communicates with a server 104 through a network. A data storage system may store data that the server 104 needs to process. The data storage system may be arranged separately, or may be integrated on the server 104, or may be arranged on a cloud or another server.

The terminal 102 may perform image acquisition, for example, may perform industrial product image acquisition or medical image acquisition. The terminal 102 may send an image acquired to the server 104 for detection through a network. The server 104 obtains the to-image sent by the terminal 102, obtains through extraction an original image feature from the image, and encodes the original image feature of the image, to obtain an encoded detection feature of the image. The server 104 determines an original prompt feature from a reference image that includes no anomaly and is associated with the image, and encodes the original prompt feature, to obtain an encoded prompt feature. The server 104 performs combined decoding processing on the encoded detection feature and the encoded prompt feature, through at least one layer sequentially in an image anomaly detection model, to obtain a combined decoding feature output based on combined decoding processing through the at least one layer; in each layer of combined decoding processing, performs attention feature extraction on an input encoded detection feature and an input encoded prompt feature, to obtain an output encoded prompt feature; and performs attention feature extraction on the output encoded prompt feature and the input encoded detection feature, to obtain an output encoded detection feature. The server 104 obtains a reconstruction feature of the image according to the combined decoding feature, and determines a feature difference between the reconstruction feature and the original image feature. The server 104 may obtain an anomalous detection result of the image based on the feature difference. The server 104 may further feed back the anomalous detection result to the terminal 102. in some embodiments, the image anomaly detection method may alternatively be independently implemented by the server 104 or the terminal 102. For example, the server 104 may directly obtain the image from a data storage system, and perform image anomaly detection processing on the image. For another example, after the terminal 102 acquires the image, the terminal 102 may directly perform image anomaly detection processing on the image.

An image anomaly detection model processing method provided in the embodiments of the present disclosure may be applied to an application environment shown in FIG. 1. Specifically, the server 104 may obtain a normal sample image, and a reference sample image and an anomalous sample image that are associated with the normal sample image. The normal sample image, the reference sample image, and the anomalous sample image may be sent by the terminal 102 to the server 104. The server 104 may separately perform feature extraction on the normal sample image, the reference sample image, and the anomalous sample image, to obtain respective image features. The server 104 separately encodes the respective image features through a mage anomaly detection model, to obtain an encoded normal sample feature, an encoded prompt sample feature, and an encoded anomalous sample feature. The server 104 performs combined decoding processing based on the encoded normal sample feature and the encoded prompt sample feature through at least one layer sequentially in the image anomaly detection model, to construct a sample reconstruction feature for the normal sample image; and performs combined decoding processing based on the encoded anomalous sample feature and the encoded prompt sample feature through at least one layer sequentially in the image anomaly detection model, to construct a sample restoration feature for the anomalous sample image. After updating the image anomaly detection model based on the sample reconstruction feature, the sample restoration feature, and a normal image feature, the server 104 continues to perform training, to obtain an image anomaly detection model, on which training is completed, that is configured for performing image anomaly detection on an input image. After obtaining the image anomaly detection model on which training is completed, a user may send the image to the server 104 through the terminal 102. The server 104 may input the image sent by the terminal 102 into the image anomaly detection model on which training is completed to perform image anomaly detection, and feed back an anomalous detection result output by the image anomaly detection model to the terminal 102.

The terminal 102 may be, but is not limited to, various desktop computers, laptops, smartphones, tablets, internet of things devices, and portable wearable devices. The internet of things devices may be a smart speaker, a smart television, a smart air conditioner, a smart vehicle-mounted device, and the like. The portable wearable devices may be a smart watch, a smart bracelet, a head-mounted device, and the like. The server 104 may be an independent physical server, or may be a server cluster including a plurality of physical servers or a distributed system, or may be a cloud server providing basic cloud computing services, such as a cloud service, a cloud database, cloud computing, a cloud function, cloud storage, a network service, cloud communication, a middleware service, a domain name service, a security service, a CDN, big data, and an artificial intelligence platform. The terminal 102 and the server 104 may be directly or indirectly connected to each other in a wired or wireless communication manner. This is not limited herein.

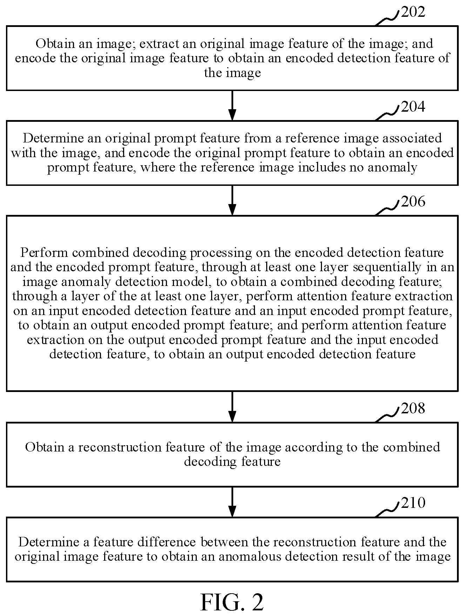

In an exemplary embodiment, as shown in FIG. 2, an image anomaly detection method is provided. The method is performed by a computer device. Specifically, the method may be separately performed by a computer device such as a terminal or a server, or may be jointly performed by the terminal and the server. in some embodiments of the present disclosure, descriptions are provided by using an example in which the method is applied to the server in FIG. 1, and the method includes the following operation 202 to operation 210.

Operation 202: Obtain an image; extract an original image feature of the image; and encode the original image feature to obtain an encoded detection feature of the image.

An image anomaly detection technology is widely applied to a plurality of fields. For example, in the medical field, image anomaly detection may be configured for disease diagnosis. In the field of self-driving, the technology may help a vehicle recognize an anomalous object on a road. In retail services, image anomaly detection may be configured for recognizing an anomalous behavior. In the field of agriculture, image anomaly detection may be configured for health monitoring and pest detection of crops. The image is an image on which anomaly detection needs to be performed, and the image may be acquired by an image acquiring device. In different image anomaly detection application scenarios, the image may include different image content. The original image feature may be an image feature initially obtained through extraction for the image. For example, the original image feature may be obtained through extraction from the image through a pre-trained feature extraction network. The feature extraction network may be obtained through training based on various neural network algorithms, and may specifically include, but is not limited to, at least one of a convolutional neural network (CNN), a recurrent neural network (RNN), a transformer, a feedforward neural network, a generative adversarial network (GAN), or an autoencoder. The encoded detection feature is obtained by encoding based on the original image feature. Specifically, the original image feature may be encoded through an encoding network, to obtain the encoded detection feature of the image. During specific implementation, the encoding network may be obtained based on various neural network model architectures, for example, may be obtained through construction based on an attention mechanism.

For example, when the computer device configured to perform the image anomaly detection method includes the server, the server may obtain the image on which image anomaly detection needs to be performed, and the server extracts the original image feature of the image. Specifically, the server may invoke the pre-trained feature extraction network to perform feature extraction on the image, to obtain the original image feature. The server may encode the original image feature. Specifically, the server may perform encoding processing on the original image feature by invoking the encoding network including at least one layer, to obtain the encoded detection feature of the image. Decoding processing is performed on the encoded detection feature of the image, so that feature reconstruction may be performed on the image, and anomaly detection processing can be performed on the image by using an obtained reconstruction feature.

Step 204: Determine an original prompt feature from a reference image associated with the image, and encode the original prompt feature to obtain an encoded prompt feature, where the reference image includes no anomaly.

The original prompt feature associated with the image may be specifically an initial image feature obtained through extraction for the reference image corresponding to the image. The reference image corresponding to the image includes no anomaly, i.e., being anomaly-free, and is a normal image compared with the image which may include any anomaly, that is, the reference image corresponding to the image has no anomaly. For example, in an anomaly detection processing scenario for a medical image, the image may be an acquired medical image that needs to be detected, and the reference image may be a medical image that has been determined in advance to be a normal image, that is, a medical image that includes no anomaly. A higher similarity degree between the image and the reference image, for example, a higher feature matching degree between an image feature of the image and an image feature of the reference image, indicates that the image is more similar to the reference image, that is, the image is more likely to belong to a normal image including no anomaly. A lower similarity degree between the image and the reference image indicates a higher possibility that the image is an anomalous image including anomalous content. For example, various anomalous content such as a foreign object, a scratch, and a loss may exist in the image.

During specific application, the server may obtain in advance reference images including no anomaly and perform feature extraction on the reference images. For example, the server may perform feature extraction through the pre-trained feature extraction network, to obtain original prompt features of the reference images. After obtaining the image, the server may determine the original prompt feature associated with the image from the original prompt features of the reference images. The encoded prompt feature is obtained by encoding based on the original prompt feature. Specifically, the original prompt feature may be encoded through the encoding network, to obtain the encoded prompt feature.

In some embodiments, the server may determine the original prompt feature associated with the image. During specific implementation, the server may prestore the respective original prompt features of the reference images, and the respective original prompt features of the reference images may be obtained by the server by separately performing, in advance, feature extraction on the reference images through the feature extraction network. The server may directly determine, from the stored original prompt features, the original prompt feature associated with the image. For example, the server may separately match the original image feature of the image with the stored original prompt features, and determine, according to a matching result, the original prompt feature associated with the image. Specifically, the server may use, as the original prompt feature associated with the image, an original prompt feature whose matching degree represented by the matching result is the highest or whose matching degree exceeds a preset similarity threshold. in some embodiments, the server may alternatively first determine the reference image corresponding to the image, and perform feature extraction on the reference image corresponding to the image, to obtain the original prompt feature associated with the image. The server may encode the original prompt feature. Specifically, the server may perform encoding processing on the original prompt feature by invoking the encoding network including at least one layer, to obtain the encoded prompt feature. in some embodiments, the original image feature and the original prompt feature of the image may be respectively obtained through extraction through the same feature extraction network, and encoding for the original image feature and the original prompt feature may also be implemented based on the same encoding network.

Operation 206: Perform combined decoding processing on the encoded detection feature and the encoded prompt feature, through at least one layer sequentially in an image anomaly detection model, to obtain a combined decoding feature; through a layer of the at least one layer, perform attention feature extraction on an input encoded detection feature and an input encoded prompt feature, to obtain an output encoded prompt feature; and perform attention feature extraction on the output encoded prompt feature and the input encoded detection feature, to obtain an output encoded detection feature.

An input of combined decoding processing is the encoded detection feature of the image and the encoded prompt feature; and an output of combined decoding processing may also include the corresponding encoded detection feature and encoded prompt feature. That is, the combined decoding feature output based on combined decoding processing through at least one layer may include an encoded detection feature and an encoded prompt feature that are correspondingly output based on combined decoding processing in a last layer. In multi-layer combined decoding processing, combined decoding processing in a first layer may be directly implemented based on the encoded detection feature of the image and the encoded prompt feature obtained by encoding the original prompt feature. Starting from combined decoding processing in a second layer, the encoded detection feature and the encoded prompt feature that are correspondingly output based on combined decoding processing in a previous layer may be used as an input in a current layer, to perform combined decoding processing that is iterated a plurality times until combined decoding processing in a last layer is completed, and output the combined decoding feature. The combined decoding feature may include the encoded detection feature and the encoded prompt feature that are correspondingly output in the last layer.

In each layer of combined decoding processing, the encoded detection feature and the encoded prompt feature input in the current layer, and may be specifically an output based on combined decoding processing in a previous layer. The attention feature extraction may be based on feature extraction processing implemented based on the attention mechanism. There is a specific association between the encoded detection feature and the encoded prompt feature. Extracting attention feature includes: extracting a feature indicating correlation between two features based on the attention mechanism. Performing attention feature extraction on an input encoded detection feature and an input encoded prompt feature includes: extracting a feature from the input encoded detection feature which has correlation with the input encoded prompt feature, or extracting a feature from the input encoded prompt feature which has correlation with the input encoded detection feature, to obtain an output encoded prompt feature; and performing attention feature extraction on the output encoded prompt feature and the input encoded detection feature includes: extracting a feature from the output encoded prompt feature which has correlation with the input encoded detection feature, or, extracting a feature from the input encoded detection feature which has correlation with the output encoded prompt feature, to obtain an output encoded detection feature. The correlation established through the attention mechanism enables the extracted feature having a stronger representation capability. That is, expression of the correlation between the encoded detection feature and the encoded prompt feature may be enhanced through the attention mechanism. The encoded prompt feature output in the current layer is obtained by performing attention feature extraction based on the encoded detection feature and the encoded prompt feature that are input in the current layer. The encoded detection feature output in the current layer is obtained by performing attention feature extraction based on the encoded prompt feature that is output in the current layer and the encoded detection feature that is input in the current layer.

Specifically, the server may perform combined decoding processing through at least one layer based on the encoded detection feature and the encoded prompt feature that are obtained by encoding, to obtain the combined decoding feature. In each layer of combined decoding processing, the server may determine the encoded detection feature and the encoded prompt feature that are input in the current layer, and perform feature extraction on the encoded detection feature and the encoded prompt feature based on the attention mechanism, to obtain the encoded prompt feature output in the current layer. Further, the server performs, based on the attention mechanism, feature extraction on the output encoded prompt feature and the input encoded detection feature, to obtain the encoded detection feature output in the current layer. The server may use an output of the combined decoding processing in the current layer as an input of combined decoding processing in a next layer, that is, the server may input the encoded prompt feature and the encoded detection feature that are output based on combined decoding processing in the current layer to the next layer, to perform combined decoding processing in the next layer. in some embodiments, combined decoding processing through at least one layer may be implemented based on a combined decoding processing layer structure. Each layer structure may implement combined decoding processing in one layer, so that combined decoding processing through at least one layer is correspondingly implemented by setting at least one layer structure.

In some embodiments, the server may obtain an encoded detection feature A and an encoded prompt feature B of the image, and perform combined decoding processing through at least one layer on the encoded detection feature A and the encoded prompt feature B. Specifically, the server may use the encoded detection feature A as an encoded detection feature Ai1 input in the first layer, use the encoded prompt feature B as an encoded prompt feature Bi1 input in the first layer, and perform combined decoding processing in the first layer based on the encoded detection feature Ai1 and the encoded prompt feature Bi1, to respectively obtain an encoded detection feature Ao1 and an encoded prompt feature Bo1 that are output in the first layer. The server may perform combined decoding processing in the second layer based on the encoded detection feature Ao1 and the encoded prompt feature Bo1. Specifically, the server may use the encoded detection feature Ao1 as an encoded detection feature Ai2 input in the second layer, use the encoded prompt feature Bo1 as an encoded prompt feature Bi2 input in the first layer, and perform combined decoding processing in the second layer based on the encoded detection feature Ai2 and the encoded prompt feature Bi2, to obtain an encoded detection feature Ao2 and an encoded prompt feature Bo2 that are output in the second layer. The server may perform combined decoding processing at a next layer based on the encoded detection feature Ao2 and the encoded prompt feature Bo2 until combined decoding processing in all layers ends. The server may obtain the combined decoding feature according to an encoded detection feature Aon and an encoded prompt feature Bon that are output based on combined decoding processing in a last layer (for example, an n^{th} layer, where n is an integer greater than or equal to 1). That is, the combined decoding feature may include the encoded detection feature Aon and the encoded prompt feature Bon.

Operation 208: Obtain a reconstruction feature of the image according to the combined decoding feature.

The reconstruction feature is a feature obtained by performing feature reconstruction on the image, and may be specifically obtained by performing feature mapping on the combined decoding feature. For example, feature mapping may be performed on the combined decoding feature based on the attention mechanism, to obtain the reconstruction feature of the image. Specifically, the server may obtain the reconstruction feature of the image according to the combined decoding feature. For example, the server may perform feature mapping on the combined decoding feature through a feature mapping layer, to obtain the reconstruction feature of the image. During specific implementation, feature mapping for the combined decoding feature may be implemented according to an actual requirement. For example, attention feature extraction may be further performed on the combined decoding feature, to obtain the reconstruction feature of the image.

Operation 210: Determine a feature difference between the reconstruction feature and the original image feature to obtain an anomalous detection result of the image.

The feature difference is configured for representing a feature difference between the reconstruction feature and the original image feature, and may be specifically obtained by performing feature comparison on the reconstruction feature and the original image feature. The anomalous detection result of the image may be determined according to the feature difference. For example, the server may determine the feature difference between the reconstruction feature and the original image feature. Specifically, the server may perform feature comparison on the reconstruction feature and the original image feature, to obtain the feature difference, and the server determines the anomalous detection result of the image based on the feature difference. For example, the server may map the feature difference, to obtain an anomaly detection parameter of the image, and may obtain the anomalous detection result of the image according to the anomaly detection parameter. in some embodiments, the anomaly detection parameter may include an anomaly detection score. The anomalous detection result may be determined based on the anomaly detection score and a score threshold. If the anomaly detection score exceeds the score threshold, it may be considered that there is an anomaly in the image, that is, the image is an anomalous image.

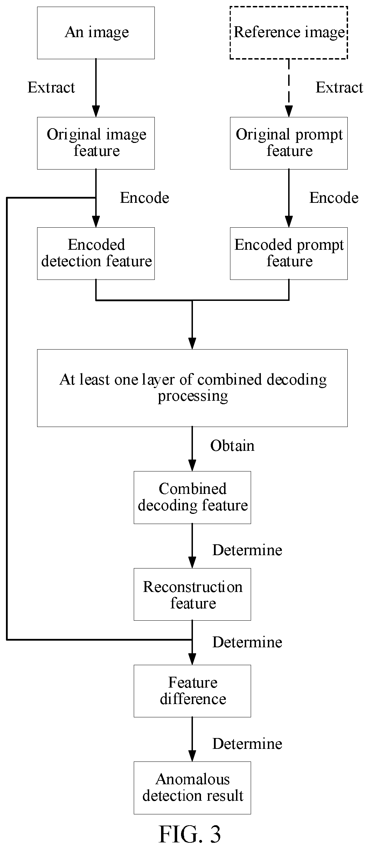

In some embodiments, as shown in FIG. 3, after obtaining the image, the server extracts the original image feature of the image, and encodes the original image feature to obtain the encoded detection feature of the image. The server obtains the original prompt feature associated with the image. The original prompt feature is obtained through extraction by performing feature extraction based on the reference image that includes no anomaly and that corresponds to the image. The server encodes the original prompt feature to obtain the encoded prompt feature. The server performs combined decoding processing on the encoded detection feature and the encoded prompt feature, to obtain the combined decoding feature, through at least one layer sequentially in an image anomaly detection model. The server determines the reconstruction feature based on the combined decoding feature, obtains the feature difference according to the reconstruction feature and the original image feature, and determines the anomalous detection result of the image based on the feature difference.

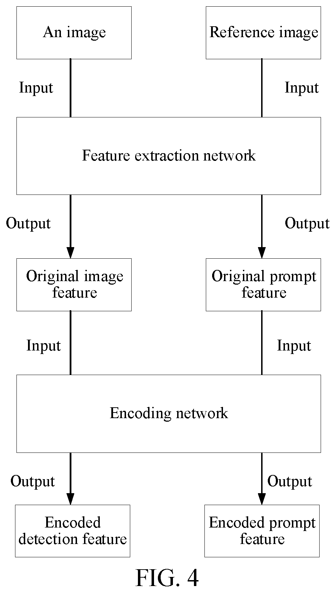

In some embodiments, as shown in FIG. 4, for the image and the reference image, feature extraction may be separately performed through the same feature extraction network. Specifically, the server may separately input the image and the reference image into the same feature extraction network, and the feature extraction network separately outputs the original image feature and the original prompt feature. Encoding for the original image feature and the original prompt feature may also be implemented through the same encoding network. Specifically, the server may separately input the original image feature and the original prompt feature into the same encoding network, and the encoding network separately outputs the encoded detection feature and the encoded prompt feature.

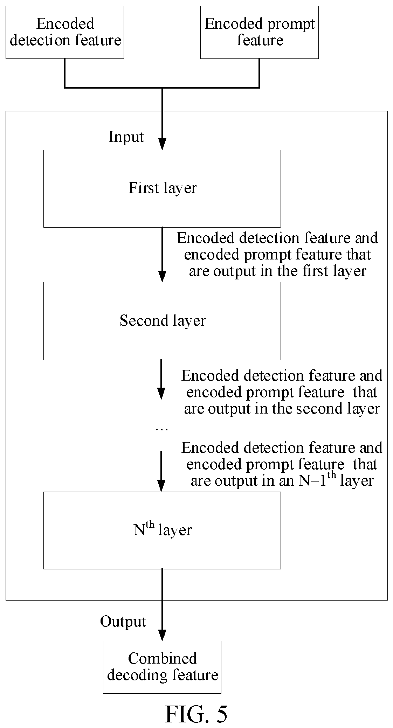

In some embodiments, as shown in FIG. 5, combined decoding processing through at least one layer may include N layers of combined decoding processing. For the first layer, combined decoding processing in the first layer may be directly performed on the encoded detection feature and the encoded prompt feature of the image. That is, in the first layer, the encoded detection feature of the image is directly used as the encoded detection feature in the current layer, and the encoded prompt feature obtained by encoding the original prompt feature is used as the encoded prompt feature in the current layer, to obtain the encoded detection feature and the encoded prompt feature that are output in the first layer. The encoded detection feature and the encoded prompt feature that are output in the first layer may be input into the second layer for combined decoding processing in the second layer. The encoded detection feature and the encoded prompt feature that are output in the second layer may be input into the next layer for combined decoding processing in the next layer. In the last layer, that is, for an N^{th} layer, the encoded detection feature and the encoded prompt feature that are output in an (N-1)^{th} layer may be used as an input to perform combined decoding processing in the N^{th} layer, to output a combined decoding feature. The combined decoding feature obtained by outputting may include the encoded detection feature and the encoded prompt feature that are output in the N^{th} layer.

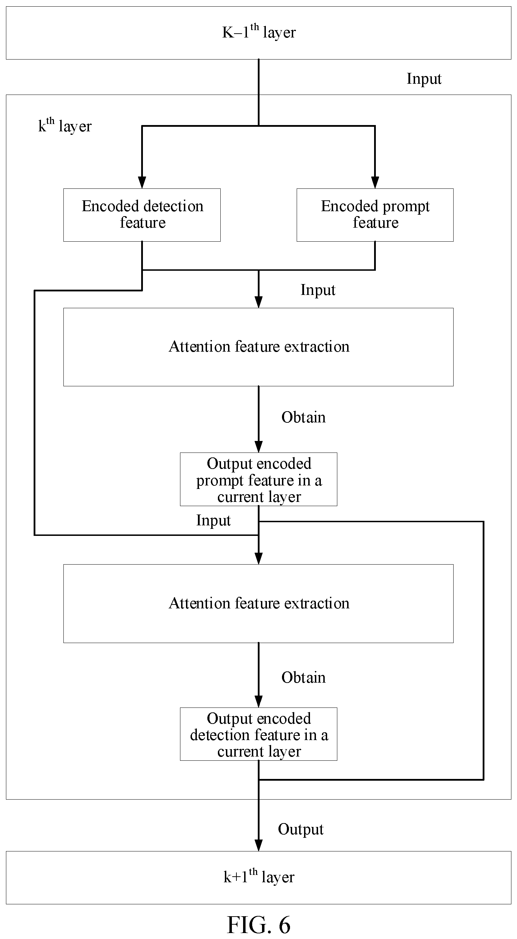

In some embodiments, as shown in FIG. 6, in each layer of combined decoding processing, for example, in combined decoding processing in a K^{th} layer, the server may use the encoded prompt feature and the encoded detection feature that are output in a (K-1)^{th} layer as an input in the K^{th} layer, that is, use the encoded prompt feature output in the (K-1)^{th} layer as the encoded prompt feature in the K^{th} layer, and use the encoded detection feature output in the (K-1)^{th} layer as the encoded detection feature in the K^{th} layer. The server performs attention feature extraction based on the encoded detection feature and the encoded prompt feature, to obtain the encoded prompt feature output in the current layer; and the server performs attention feature extraction based on the encoded prompt feature and the encoded detection feature that are output in the current layer, to obtain the encoded detection feature output in the current layer. The server outputs the encoded prompt feature and the encoded detection feature in the K^{th} layer, and the server may use the encoded prompt feature and the encoded detection feature that are output in the K^{th} layer as an input in a (K+1)^{th} layer, to perform combined decoding processing in the (K+1)^{th} layer.

In the image anomaly detection method, the original image feature of the image is encoded to obtain the encoded detection feature. The original prompt feature that is associated with the image and that is extracted from the reference image including no anomaly is encoded to obtain the encoded prompt feature. Combined decoding processing through at least one layer is performed based on the encoded detection feature and the encoded prompt feature, to obtain the combined decoding feature. In each layer of combined decoding processing, attention feature extraction is performed on the encoded detection feature and the encoded prompt feature that are input in the current layer, to obtain the encoded prompt feature output in the current layer. In addition, attention feature extraction is performed on the encoded prompt feature and the encoded detection feature that are output in the current layer, to obtain the encoded detection feature output in the current layer. The reconstruction feature of the image is obtained according to the combined decoding feature, and the anomalous detection result of the image is obtained based on the feature difference between the reconstruction feature and the original image feature. During image anomaly detection processing, in each layer of combined decoding processing, attention feature extraction is performed through the encoded detection feature and the encoded prompt feature that are input in the current layer, to obtain the encoded prompt feature output in the current layer, and attention feature extraction is performed on the encoded prompt feature and the encoded detection feature that are output in the current layer, to obtain the encoded detection feature output in the current layer. The combined decoding feature can be constructed by comprehensively using image context information including no anomalous reference image and a dynamic encoded prompt feature corresponding to each layer, thereby enhancing a feature expression capability of the combined decoding feature, and improving accuracy of performing image anomaly detection on a reconstruction feature obtained based on the combined decoding feature.

In an exemplary embodiment, that attention feature extraction is performed on the input encoded detection feature and the input encoded prompt feature, to obtain the output encoded prompt feature in the current layer includes: obtaining a first key feature and a first value feature according to the input encoded detection feature, and obtaining a first query feature according to the input encoded prompt feature; and performing cross-attention feature extraction on the first key feature, the first value feature, and the first query feature, to obtain the output encoded prompt feature .

In the attention mechanism, query (Q), key (K), and value (V) are three core concepts. Performing cross-attention feature extraction on the first key feature, the first value feature, and the first query feature includes: calculating correlation between the first query feature and the first key feature as a weight of the first value feature, and then multiplying the weight and the first value feature, to obtain a cross-attention feature. In such a mechanism, a key and a value that are most related to query may be adaptively selected and focused on according to a requirement of query when information is processed. A key feature may be used as a key vector in the attention mechanism, a value feature may be used as a value vector in the attention mechanism, and a query feature may be used as a query vector in the attention mechanism.

A cross-attention mechanism is a variation of a neural network attention mechanism, and is mainly configured for processing association information between a plurality of input sequences or features. In a conventional self-attention mechanism, attention calculation is performed between input sequences or features. However, in the cross-attention mechanism, attention between different input sequences or features is further calculated in addition to calculating self-attention within an input sequence or a feature. In the cross-attention mechanism, attention may be selectively paid to a specific region or feature in an image, to generate a more distinctive feature representation, so that image content can be recognized and understood more accurately. In addition, attention modules in different layers can capture features in different layers, to implement increasing performance improvement. With such a mechanism, a model can be more flexible and efficient when a complex image task is processed.

Specifically, in each layer of combined decoding processing, the server may determine an input in the current layer, including the encoded detection feature and the encoded prompt feature, and the input in the current layer may be specifically an output in the previous layer. The server separately constructs parameters, including the key feature, the value feature, and the query feature, under the attention mechanism according to the input in the current layer. During specific application, the server may obtain the first key feature and the first value feature according to the encoded detection feature, for example, may directly use the encoded detection feature as the first key feature and the first value feature respectively. The server may obtain the first query feature according to the encoded prompt feature input in the current layer. For example, the server may directly use the encoded prompt feature as the first query feature. The server performs cross-attention feature extraction according to the obtained first key feature, first value feature, and first query feature. Specifically, the server may perform feature extraction on the first key feature, the first value feature, and the first query feature based on the cross-attention mechanism, to obtain the encoded prompt feature output in the current layer.

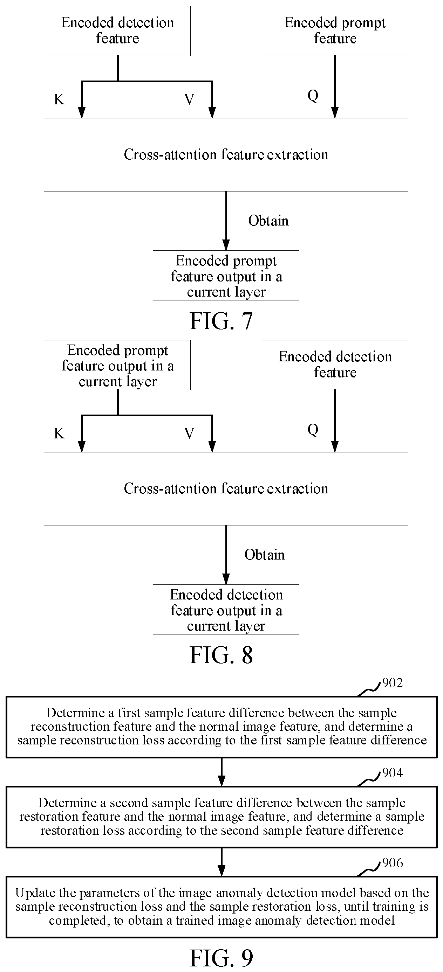

In some embodiments, as shown in FIG. 7, in combined decoding processing in a specific layer, the encoded detection feature input in the current layer is used as a key vector (K) and a value vector (V) respectively, the encoded prompt feature input in the current layer is used as a query vector (Q), and cross-attention feature extraction is performed through the key vector (K), the value vector (V), and the query vector (Q), to obtain the encoded prompt feature output in the current layer.

In some embodiments, in each layer of combined decoding processing, the server obtains the first key feature and the first value feature according to the encoded detection feature input in the current layer, obtains the first query feature according to the encoded prompt feature input in the current layer, and performs cross-attention feature extraction based on the determined first key feature, first value feature, and first query feature, so that cross-attention processing on the encoded prompt feature and the encoded detection feature may be implemented, and a feature expression capability of the encoded prompt feature output in the current layer is enhanced, thereby facilitating improving accuracy of image anomaly detection.

In an exemplary embodiment, the performing cross-attention feature extraction on the first key feature, the first value feature, and the first query feature, to obtain the output encoded prompt feature includes: performing cross-attention feature extraction based on the attention mechanism according to the first key feature, the first value feature, and the first query feature, to obtain a first cross-attention feature; fusing the first cross-attention feature and the first query feature, to obtain a fusion feature; performing multi-layer mapping on the fusion feature at least once, to obtain a mapping feature; and fusing the mapping feature and the fusion feature, to obtain the output encoded prompt feature.

The cross-attention feature is a feature directly obtained by performing cross-attention feature extraction based on the attention mechanism, and the cross-attention feature may be obtained according to the corresponding value feature, key feature, and query feature. The fusion feature is obtained by fusing the first cross-attention feature and the first query feature. During specific implementation, weighted fusion may be performed on the first cross-attention feature and the first query feature. The mapping feature is obtained by mapping the fusion feature. Specifically, mapping processing may be performed on the fusion feature through a layer mapping structure. For example, mapping processing is performed on the fusion feature through a multilayer perceptron (MLP) structure, to obtain the mapping feature.

For example, the server may directly perform cross-attention feature extraction on the first key feature, the first value feature, and the first query feature based on the attention mechanism, to obtain the first cross-attention feature. The server may fuse the first cross-attention feature and the first query feature, to obtain the fusion feature. Feature information in different layers or information in different modalities is fused through residual fusion, to obtain richer feature representation. Residual fusion is multimodal feature fusion performed with a residual (skip) connection, typically by adding a transformed cross-modal representation to one of the input modality features. The server may perform feature mapping on the fusion feature at least once. For example, the server may perform mapping on the fusion feature through at least one layer mapping structure, to obtain the mapping feature. The server further fuses the mapping feature and the fusion feature. Specifically, the server may perform weighted fusion on the mapping feature and the fusion feature, to obtain the output encoded prompt feature in the current layer.

In some embodiments, the server fuses the obtained first cross-attention feature and the first query feature, performs feature mapping on the fusion feature at least once, and then fuses the mapping feature and the fusion feature, so that image feature information in different layers can be fused, and a feature expression capability of the encoded prompt feature output in the current layer can be enhanced, thereby facilitating improving accuracy of image anomaly detection.

In an exemplary embodiment, that attention feature extraction is performed on the output encoded prompt feature and the input encoded detection feature, to obtain an output encoded detection feature includes: obtaining a second key feature and a second value feature according to the output encoded prompt feature, and obtaining a second query feature according to the input encoded detection feature; and performing cross-attention feature extraction on the second key feature, the second value feature, and the second query feature, to obtain the output encoded detection feature.

For example, in each layer of combined decoding processing, the server may separately construct parameters, including the key feature, the value feature, and the query feature, under the attention mechanism according to output encoded prompt feature and the input encoded detection feature in the current layer. During specific application, the server may obtain the second key feature and the second value feature according to the output encoded prompt feature in the current layer. For example, the server may directly use the output encoded prompt feature in the current layer as the second key feature and the second value feature respectively. The server may obtain the second query feature according to the input encoded detection feature in the current layer. For example, the server may directly use the input encoded detection feature as the second query feature. The server performs cross-attention feature extraction according to the obtained second key feature, second value feature, and second query feature. Specifically, the server may perform feature extraction on the second key feature, the second value feature, and the second query feature based on the cross-attention mechanism, to obtain the encoded detection feature output in the current layer.

In some embodiments, as shown in FIG. 8, in combined decoding processing in a specific layer, the output encoded prompt feature in the current layer is used as a key vector (K) and a value vector (V) respectively, the input encoded detection feature in the current layer is used as a query vector (Q), and cross-attention feature extraction is performed through the key vector (K), the value vector (V), and the query vector (Q), to obtain the output encoded detection feature in the current layer.

In some embodiments, in each layer of combined decoding processing, the server obtains the second key feature and the second value feature according to the output encoded prompt feature in the current layer, obtains the second query feature according to the input encoded detection feature in the current layer, and performs cross-attention feature extraction based on the determined second key feature, second value feature, and second query feature, so that cross-attention processing on the encoded detection feature and the encoded prompt feature may be implemented, and a feature expression capability of the output encoded prompt feature in the current layer is enhanced, thereby facilitating improving accuracy of image anomaly detection.

In an exemplary embodiment, the performing cross-attention feature extraction on the second key feature, the second value feature, and the second query feature, to obtain the output encoded detection feature in the current layer includes:
performing cross-attention feature extraction on the second key feature, the second value feature, and the second query feature, to obtain a second cross-attention feature; and fusing the second cross-attention feature and the second query feature, to obtain the output encoded detection feature.

In some embodiments, the server may directly perform cross-attention feature extraction on the second key feature, the second value feature, and the second query feature based on the attention mechanism, to obtain the second cross-attention feature. The server may fuse the second cross-attention feature and the second query feature, to obtain the output encoded detection feature in the current layer. in some embodiments, the server fuses the obtained second cross-attention feature and the second query feature, so that image feature information in different layers can be fused, and a feature expression capability of the output encoded detection feature in the current layer can be enhanced, thereby facilitating improving accuracy of image anomaly detection.

In an exemplary embodiment, at least one layer includes a plurality of layers. The performing combined decoding processing based on the encoded detection feature and the encoded prompt feature, through at least one layer sequentially in an image anomaly detection model, to obtain a combined decoding feature output based on combined decoding processing through at least one layer sequentially includes:
performing, in a first layer of the plurality of layers, attention feature extraction on the encoded detection feature and the encoded prompt feature that are input in the first layer, to obtain an encoded prompt feature output in the first layer, and performing attention feature extraction on the encoded prompt feature output in the first layer and the encoded detection feature, to obtain an encoded detection feature output in the first layer; and performing, in each layer starting from a second layer of the plurality of layers, combined decoding processing in the respective layer based on an encoded prompt feature and an encoded detection feature that are output in a layer previous to the respective layer, to obtain the encoded prompt feature and the encoded detection feature that are output in the respective layer.

When combined decoding processing includes a plurality of layers, for combined decoding processing in the first layer, combined decoding processing is directly performed on the encoded detection feature of the image and the encoded prompt feature obtained by encoding the original prompt feature that are used as an input. From the second layer, an output in the previous layer is used as an input in the current layer for combined decoding processing.

For example, for combined decoding processing in the first layer in the plurality of layers, the server may directly perform attention feature extraction on the encoded detection feature and the encoded prompt feature that are input in the first layer, to obtain the output encoded prompt feature in the first layer. The server performs attention feature extraction on the output encoded prompt feature and the input encoded detection feature, to obtain the output encoded detection feature in the first layer. In each layer starting from the second layer, the server uses the encoded prompt feature and the encoded detection feature that are output in the previous layer as the encoded detection feature and the encoded prompt feature that are input in the current layer. During specific implementation, the server may determine the encoded prompt feature and the encoded detection feature that are output in the previous layer, perform combined decoding processing in the current layer based on the encoded prompt feature and the encoded detection feature that are output in the previous layer, to obtain the encoded prompt feature and the encoded detection feature that are output in the current layer until combined decoding processing is completed in the last layer, and obtain the combined decoding features in the plurality of layers according to an output of the combined decoding processing in the last layer.

In some embodiments, the server performs combined decoding processing in the plurality of layers based on the encoded detection feature and the encoded prompt feature, and may perform deep-layer attention feature extraction based on the encoded detection feature and the encoded prompt feature, which facilitates enhancing a feature expression capability of the combined decoding feature, thereby improving accuracy of image anomaly detection based on the combined decoding feature.

In an exemplary embodiment, that the reconstruction feature of the image is obtained according to the combined decoding feature includes: performing cross-attention feature extraction on the encoded detection feature and the encoded prompt feature that are included in the combined decoding feature, to obtain the reconstruction feature of the image.

The combined decoding feature is obtained according to an output of combined decoding processing in the last layer in combined decoding processing, and the combined decoding feature may include the encoded prompt feature and the encoded detection feature that are output based on combined decoding processing in the last layer.

Specifically, for the combined decoding feature output based on combined decoding processing, the server may perform cross-attention feature extraction according to the encoded detection feature and the encoded prompt feature that are included in the combined decoding feature. For example, the server may extract a part of feature from the encoded detection feature, and the part of feature has the highest similarity with the encoded prompt feature.

In some embodiments, the server performs cross-attention feature extraction on the encoded detection feature and the encoded prompt feature that are included in the combined decoding feature, to obtain, through reconstruction based on the attention mechanism, the reconstruction feature of the image by using the combined decoding feature. The server may further fuse information respectively carried in the encoded detection feature and the encoded prompt feature, so that a feature expression capability of the reconstruction feature can be enhanced, thereby facilitating improving accuracy of image anomaly detection.

In an exemplary embodiment, the obtaining an anomalous detection result of the image based on the feature difference includes: mapping the feature difference, to obtain an anomalous mapping parameter; and determining an anomalous detection result of the image based on the anomalous mapping parameter.

The feature difference is configured for representing a similarity degree between the reconstruction feature and the original image feature, and may reflect an error generated during reconstruction of the image. The anomalous mapping parameter is obtained by mapping based on the feature difference, and may be specifically implemented by mapping the feature difference through a preset mapping relationship.

For example, the server may determine the feature difference between the reconstruction feature and the original image feature. Specifically, the server may compare the reconstruction feature with the original image feature, to obtain the feature difference. For example, the server may determine the feature difference based on absolute element-wise subtraction between the reconstruction feature and the original image feature. The server may map the feature difference, and may specifically map the feature difference according to the preset mapping relationship, to obtain the anomalous mapping parameter. For example, the server may perform L2 norm mapping on the feature difference, to obtain an L2 norm of the feature difference, and use the L2 norm as the anomalous mapping parameter. The server obtains the anomalous detection result of the image based on the anomalous mapping parameter. For example, the server may directly obtain the anomalous detection result according to the anomalous mapping parameter, or may obtain the anomalous detection result of the image after performing anomaly determining on the anomalous mapping parameter. For example, the server may compare the anomalous mapping parameter with a preset threshold. When the anomalous mapping parameter exceeds the preset threshold, it is considered that the image is an anomalous image, and then the server may obtain the anomalous detection result indicating that the image is the anomalous image.

In some embodiments, after mapping the feature difference between the reconstruction feature and the original image feature, the server determines the anomalous detection result according to the anomalous mapping parameter obtained through mapping, to perform quantitative anomaly determining on the image, which facilitates ensuring accuracy of image anomaly detection.

In an exemplary embodiment, the image anomaly detection method further includes: performing pixel feature extraction on the feature difference, to obtain a pixel anomaly result.

The pixel anomaly result is obtained by performing pixel feature extraction on the feature difference. The pixel feature extraction refers to performing feature extraction on the feature difference based on a pixel level, and may specifically include various feature extraction processing such as convolution, normalization, and linear rectification. For example, the server may further perform pixel feature extraction on the feature difference. Specifically, the server may perform pixel feature extraction on the feature difference through at least one layer, for example, may perform pixel feature extraction through at least one layer, such as a convolution operation, normalization processing, linear rectification, and deconvolution on the feature difference, to obtain the pixel anomaly result. The pixel anomaly result may reflect the anomalous detection result of the image in the pixel level, and may specifically include the anomalous image. The anomalous image may be an anomalous image region detected in the image.

Further, the determining an anomalous detection result of the image based on the anomalous mapping parameter includes: performing weighted fusion on the anomalous mapping parameter and the pixel anomaly result, to obtain an anomalous fusion result; and determining the anomalous detection result of the image according to the anomalous fusion result.

The anomalous fusion result is obtained by performing weighted fusion on the anomalous mapping parameter and the pixel anomaly result. Specifically, the server may fuse the anomalous mapping parameter with the pixel anomaly result, and may specifically fuse the anomalous mapping parameter with the pixel anomaly result according to a preset weighted weight, to obtain the anomalous fusion result. The server obtains the anomalous detection result of the image based on the anomalous fusion result. During specific application, the anomalous fusion result may include a quantization parameter, and the server may perform value comparison on the anomalous fusion result and a threshold parameter, to determine the anomalous detection result of the image according to a value comparison result.

In some embodiments, the server performs pixel feature extraction on the feature difference, to obtain the pixel anomaly result, and determines the anomalous detection result of the image by performing weighted fusion on the anomalous mapping parameter and the pixel anomaly result, so that anomaly detection may be performed on the image from different dimensions, thereby improving accuracy of image anomaly detection.

In an exemplary embodiment, the encoding the original image feature, to obtain an encoded detection feature of the image includes: performing attention feature encoding on the original image feature, to obtain the encoded detection feature of the image.

The original image feature may be obtained through extraction from the image through the pre-trained feature extraction network, and the original image feature is used as an initial image feature obtained through extraction for the image. Feature encoding is performed on the original image feature based on the attention mechanism, to obtain the encoded detection feature. To obtain a deep-level feature through encoding, attention feature encoding may be performed on the original image feature in multiple layers of transformer encoders, and a transformer encoder in each layer has self-attention.

Specifically, the server may perform feature extraction on the obtained image. For example, the server may perform feature extraction on the image by invoking the pre-trained feature extraction network, to obtain the original image feature. The server performs attention feature encoding on the original image feature. Specifically, the server may perform attention feature encoding on the original image feature through at least one layer by invoking the encoding network, to obtain the encoded detection feature of the image. During specific application, the server may perform attention feature encoding on the original image feature through at least one layer based on a self-attention mechanism, that is, perform self-attention feature extraction on the original image feature, to obtain the encoded detection feature of the image. in some embodiments, various processing such as residual fusion and feature mapping may be further introduced for attention feature encoding, to enrich information carried in the encoded detection feature, and ensure a feature expression capability of the encoded detection feature.

Further, the determining an original prompt feature from a reference image associated with the image, and encoding the original prompt feature to obtain an encoded prompt feature includes: determining the original prompt feature from a prompt feature pool, the prompt feature pool comprising at least one candidate prompt feature extracted from reference images; and performing attention feature encoding on the original prompt feature, to obtain the encoded prompt feature.

The prompt feature pool is configured for storing the candidate prompt features, and a candidate prompt feature is an original image feature obtained through extraction based on the reference image. The reference image may be an image that has been determined in advance to be a normal image, that is, an image that includes no anomaly. Feature encoding may be performed on the original prompt feature based on the attention mechanism, to obtain the encoded prompt feature.

Specifically, the server may determine, from the prompt feature pool, the original prompt feature associated with the image. The prompt feature pool includes the at least one candidate prompt feature obtained through extraction based on the reference image(s), and the candidate prompt feature is obtained through extraction by performing feature extraction on the reference image in advance. in some embodiments, the server may query a preset prompt feature pool, and perform matching in the prompt feature pool based on the original image feature, to obtain the original prompt feature associated with the image. The server may perform attention feature encoding on the original prompt feature through at least one layer by invoking the encoding network, to obtain the encoded prompt feature. During specific application, the server may perform attention feature encoding on the original prompt feature through at least one layer based on the self-attention mechanism, that is, perform self-attention feature extraction on the original prompt feature, to obtain the encoded prompt feature. in some embodiments, various processing such as residual fusion and feature mapping may be further introduced for attention feature encoding, to enrich information carried in the encoded prompt feature, and ensure a feature expression capability of the encoded prompt feature.

In some embodiments, the server separately performs attention feature encoding on the original image feature through at least one layer and the original prompt feature, so that information about the encoded detection feature and the encoded prompt feature may be enriched based on the attention mechanism, to ensure a feature expression capability of the encoded detection feature and the encoded prompt feature, thereby facilitating improving accuracy of image anomaly detection.

In an exemplary embodiment, the determining, from a prompt feature pool, the original prompt feature associated with the image includes: determining the prompt feature pool; separately performing feature matching on the original image feature and each candidate prompt feature in the prompt feature pool, to obtain the feature matching result; and determining a candidate prompt feature corresponding to the feature matching result indicating feature matching as the original prompt feature associated with the image. For example, calculate feature similarity between the original image feature and each of the at least one candidate prompt feature in the prompt feature pool; and determine a candidate prompt feature with highest feature similarity as the original prompt feature.

The prompt feature pool is configured for storing the candidate prompt feature obtained through extraction based on each reference image. The feature matching result is configured for representing a feature matching degree between the original image feature and the corresponding candidate prompt feature.

Specifically, the server may query the preset prompt feature pool, and separately perform feature matching between the original image feature and each candidate prompt feature in the prompt feature pool. For example, the server may separately calculate a feature similarity between the original image feature and each candidate prompt feature, to obtain the feature matching result. The feature matching result may be configured for representing the feature similarity degree between the original image feature and the candidate prompt feature, to reflect whether the original image feature matches the candidate prompt feature. The server may determine the feature matching result indicating feature matching, and determine the candidate prompt feature corresponding to the feature matching result as the original prompt feature associated with the image.

In some embodiments, the server separately performs feature matching on the original image feature and each candidate prompt feature in the prompt feature pool, and determines the original prompt feature according to the feature matching result, so that the original prompt feature associated with the image can be quickly and accurately obtained for anomaly detection processing, which facilitates improving processing efficiency and accuracy of image anomaly detection.

In an exemplary embodiment, the image anomaly detection method is implemented through an image anomaly detection model; and training operations of the image anomaly detection model include: obtaining a normal sample image, and a reference sample image and an anomalous sample image that are associated with the normal sample image; separately performing feature extraction on the normal sample image, the reference sample image, and the anomalous sample image, to obtain a normal image feature of the normal sample image, a reference image feature of the reference sample image, and an anomalous image feature of the anomalous sample image; separately encoding the normal image feature, the reference image feature, and the anomalous image feature through the image anomaly detection model, to obtain an encoded normal sample feature of the normal sample image, an encoded prompt sample feature of the reference sample image, and an encoded anomalous sample feature of the anomalous sample image; performing combined decoding processing based on the encoded normal sample feature and the encoded prompt sample feature through at least one layer sequentially in the image anomaly detection model, to output a first combined decoding feature, and extracting a sample reconstruction feature for the normal sample image from the first combined decoding feature; performing combined decoding processing based on the encoded anomalous sample feature and the encoded prompt sample feature through at least one layer sequentially in the image anomaly detection model, to output a second combined decoding feature, and extracting a sample restoration feature for the anomalous sample image from the second combined decoding feature; and updating parameters of the image anomaly detection model based on the sample reconstruction feature, the sample restoration feature, and the normal image feature, to obtain a trained image anomaly detection model.

The image anomaly detection model may be obtained through construction based on various artificial neural network algorithms, and is configured for performing anomaly detection on an input image. The normal sample image is a sample image including no image anomaly. The reference sample image is associated with the normal sample image. The reference sample image is used as a sample image for reference. An image feature carried in the reference sample image is used as a prompt feature to provide training guidance for the image anomaly detection model. The anomalous sample image is a sample image including an image anomaly. The normal sample image, the reference sample image, and the anomalous sample image are specifically sample images belonging to a same application scenario, and a difference lies only in whether there is an anomaly in image content, for example, whether there is anomalous content such as a loss, a scratch, or decay.

Specifically, the server may obtain sample images for the image anomaly detection model, including the normal sample image, the reference sample image, and the anomalous sample image. The server may separately perform feature extraction on the normal sample image, the reference sample image, and the anomalous sample image. For example, the server may separately perform feature extraction on the normal sample image, the reference sample image, and the anomalous sample image through the pre-trained feature extraction network, to obtain respective original image features, which specifically include the normal image feature of the normal sample image, the reference original image feature of the reference sample image, and the anomalous image feature of the anomalous sample image. The server may construct the image anomaly detection model. The image anomaly detection model may be specifically obtained through construction based on at least one of a convolutional neural network, a recurrent neural network, a transformer, a feedforward neural network, a generated confrontation network, or an autoencoder. The server may encode the sample images through the image anomaly detection model, to obtain respective encoding features. Specifically, the server may separately obtain the normal image feature of the normal sample image, the reference original image feature of the reference sample image, and the anomalous image feature of the anomalous sample image. Original image features of the sample images may be obtained through extraction based on the same pre-trained feature extraction network. The server may separately encode the normal image feature, the reference original image feature, and the anomalous image feature through the image anomaly detection model, to obtain an encoded normal sample feature of the normal sample image, an encoded prompt sample feature of the reference sample image, and an encoded anomalous sample feature of the anomalous sample image. During specific implementation, the image anomaly detection model may include an encoder network, and an input original image feature may be encoded through the encoder network, to output a corresponding encoding feature.

The server may perform combined decoding processing based on the encoded normal sample feature and the encoded prompt sample feature through at least one layer sequentially in the image anomaly detection model, to obtain a corresponding first combined decoding feature, and obtain a sample reconstruction feature according to the first combined decoding feature; The server may perform combined decoding processing based on the encoded anomalous sample feature and the encoded prompt sample feature through at least one layer sequentially in the image anomaly detection model, to obtain a corresponding second combined decoding feature, and obtain a sample restoration feature according to the second combined decoding feature. During specific implementation, the server may separately perform combined decoding processing through the image anomaly detection model and by using a feature combination of the encoded normal sample feature, the encoded prompt sample feature, the encoded anomalous sample feature, and the encoded prompt sample feature, to obtain the corresponding sample reconstruction feature and the sample restoration feature according to respective combined decoding features. In each layer of combined decoding processing, in the image anomaly detection model, attention feature extraction is performed on the encoded detection feature and the encoded prompt feature that are input in the current layer, to obtain the encoded prompt feature output in the current layer; and attention feature extraction is performed on the encoded prompt feature and the encoded detection feature that are output in the current layer, to obtain the encoded detection feature output in the current layer.

The server updates the image anomaly detection model based on the sample reconstruction feature, the sample restoration feature, and the normal image feature without introducing a label manually marked in advance, thereby implementing unsupervised training on the image anomaly detection model. For example, a model loss may be constructed through the sample reconstruction feature, the sample restoration feature, and the normal image feature, to update a model parameter of the image anomaly detection model based on the model loss, and then continue to perform training until training is completed, to obtain the image anomaly detection model on which training is completed. A training end condition may be set according to an actual requirement, for example, training is performed a preset quantity of times, accuracy of the image anomaly detection model satisfies the end condition, or all sample images are trained.

In some embodiments, the server performs, through the image anomaly detection model, feature reconstruction based on a feature combination of the encoded normal sample feature and the encoded prompt sample feature, to obtain the sample reconstruction feature; performs feature restoration based on the feature combination of the encoded anomalous sample feature and the encoded prompt sample feature, to obtain the sample restoration feature; and updates the image anomaly detection model based on the sample reconstruction feature, the sample restoration feature, and the normal image feature. The anomalous sample image and the reference sample image are introduced to perform model training, so that a generalization capability of the image anomaly detection model can be enhanced, thereby improving accuracy of performing image anomaly detection based on the image anomaly detection model.

In an exemplary embodiment, as shown in FIG. 9, processing of model updating, that is, the updating the image anomaly detection model based on the sample reconstruction feature, the sample restoration feature, and the normal image feature, to obtain the image anomaly detection model on which training is completed includes:

Operation 902: Determine a first sample feature difference between the sample reconstruction feature and the normal image feature, and determine a sample reconstruction loss according to the first sample feature difference.

The first sample feature difference represents a feature difference between the sample reconstruction feature and the normal image feature. The sample reconstruction loss is obtained based on the first sample feature difference, and is configured for adjusting an impact degree of the sample reconstruction feature on model updating.

Specifically, the server may determine the sample reconstruction loss based on the first sample feature difference between the sample reconstruction feature and the normal image feature. Specifically, the server may determine the first sample feature difference between the sample reconstruction feature and the normal image feature. For example, the server may perform feature comparison on the sample reconstruction feature and the normal image feature, to obtain the first sample feature difference, and construct the sample reconstruction loss based on the first sample feature difference. A form of the sample reconstruction loss may be set according to an actual requirement, and may specifically include, but is not limited to, at least one or a combination of a mean square error (MSE) loss, a cross-entropy loss (CE), a logarithmic loss (LogLoss), or an L1 loss (mean absolute error, MAE).

Operation 904: Determine a second sample feature difference between the sample restoration feature and the normal image feature, and determine a sample restoration loss according to the second sample feature difference.

The second sample feature difference represents a feature difference between the sample restoration feature and the normal image feature. The sample restoration loss is obtained based on the second sample feature difference, and is configured for adjusting an impact degree of the sample restoration feature on model updating.

Specifically, the server may determine the sample restoration loss based on the second sample feature difference between the sample restoration feature and the normal image feature. Specifically, the server may determine the second sample feature difference between the sample restoration feature and the normal image feature. For example, the server may perform feature comparison on the sample restoration feature and the normal image feature, to obtain the second sample feature difference, and construct the sample restoration loss based on the second sample feature difference. A form of the sample restoration loss may be set according to an actual requirement.

Operation 906: Update the parameters of the image anomaly detection model based on the sample reconstruction loss and the sample restoration loss, until training is completed, to obtain a trained image anomaly detection model.

Specifically, the server updates the parameters of the image anomaly detection model based on the sample reconstruction loss and the sample restoration loss, and continues to perform training by using the updated image anomaly detection model until training is completed, to obtain the image anomaly detection model on which training is completed. The parameters of the image anomaly detection model are used to perform the steps in Fig. 2 and relevant embodiments. During specific application, the server may obtain the model loss according to a sum or a weighted sum of the sample reconstruction loss and the sample restoration loss, and update the image anomaly detection model based on the model loss. The sample reconstruction loss and the sample restoration loss are directly obtained through calculation based on the sample reconstruction feature, the sample restoration feature, and the normal image feature that are obtained in a training process, and unsupervised training can be performed on the image anomaly detection model without introducing a label that is manually marked in advance.

In some embodiments, the server determines the sample reconstruction loss based on the sample feature difference between the sample reconstruction feature and the normal image feature, determines the sample restoration loss based on the second sample feature difference between the sample restoration feature and the normal image feature, and performs model updating based on both the sample reconstruction loss and the sample restoration loss, so that model training can be performed from two dimensions, namely, feature reconstruction and feature restoration, to ensure a generalization capability of the image anomaly detection model for image anomaly detection, thereby improving accuracy of image anomaly detection.

In an exemplary embodiment, the image anomaly detection method further includes: determining a first sample feature difference between the sample reconstruction feature and the normal image feature, and determining a third sample feature difference between the sample restoration feature and the anomalous image feature; separately performing pixel feature extraction on the first sample feature difference and the third sample feature difference, to obtain a first pixel anomaly result and a second pixel anomaly result; and determining a pixel anomaly detection loss according to an anomalous region label carried in the anomalous sample image, the first pixel anomaly result, and the second pixel anomaly result.

The first sample feature difference represents a feature difference between the sample reconstruction feature and the normal image feature, and may be specifically obtained according to absolute element-wise subtraction between the sample reconstruction feature and the normal image feature. The third sample feature difference represents a feature difference between the sample restoration feature and the anomalous image feature, and may be specifically obtained according to absolute element-wise subtraction between the sample restoration feature and the anomalous image feature. The pixel anomaly result is obtained by performing pixel feature extraction on the feature difference. The pixel feature extraction refers to extracting feature from the feature difference based on a pixel level, and may specifically include various feature extraction processing such as convolution, normalization, and linear rectification. The pixel anomaly result may include the first pixel anomaly result and the second pixel anomaly result. The first pixel anomaly result is obtained through extraction by performing pixel feature extraction on the first sample feature difference, and the second pixel anomaly result is obtained through extraction by performing pixel feature extraction on the third sample feature difference through at least one layer. The anomalous region label may be obtained by marking the anomalous sample image in advance, and is configured for representing an anomalous image region included in the anomalous sample image.

Specifically, the server may determine the first sample feature difference according to the sample reconstruction feature and the normal image feature, and determine the third sample feature difference according to the sample restoration feature and the anomalous image feature. For example, the server may perform absolute element-wise subtraction on the sample reconstruction feature and the normal image feature, and perform absolute element-wise subtraction on the sample restoration feature and the anomalous image feature, to obtain the first sample feature difference and the third sample feature difference. The server further separately performs pixel feature extraction on the first sample feature difference and the third sample feature difference through the image anomaly detection model. Specifically, the server may perform pixel feature extraction through at least one layer. For example, the server may separately perform pixel feature extraction through at least one layer, such as a convolution operation, normalization processing, linear rectification, and deconvolution on the first sample feature difference and the third sample feature difference, to separately obtain the first pixel anomaly result and the second pixel anomaly result. The server may obtain the anomalous region label carried in the anomalous sample image. The anomalous region label may be manually marked on the anomalous sample image in advance, to represent the anomalous image region in the anomalous sample image. The server constructs the pixel anomaly detection loss based on the anomalous region label, the first pixel anomaly result, and the second pixel anomaly result. in some embodiments, the server may obtain through construction the pixel anomaly detection loss in a selected loss function form and according to the anomalous region label, the first pixel anomaly result, and the second pixel anomaly result. A form of the loss function may be flexibly set according to an actual requirement. The pixel anomaly detection loss is obtained based on the anomalous region label, the first pixel anomaly result, and the second pixel anomaly result. That is, the anomalous region label marked on the anomalous sample image in advance needs to be introduced. Calculation optimization for the pixel anomaly detection loss belongs to supervised training.

In some embodiments, the first pixel anomaly result is obtained based on the first sample feature difference between the sample reconstruction feature and the normal image feature, and the normal sample image corresponding to the normal image feature includes no anomalous image region. That is, it may be considered that the anomalous image region represented by the anomalous region label of the normal sample image is empty. The server may directly determine the first pixel anomaly detection loss of the normal sample image based on the first pixel anomaly result. The second pixel anomaly result is obtained based on the third sample feature difference between the sample restoration feature and the anomalous image feature, and the anomalous image region in the anomalous sample image corresponding to the anomalous image feature is represented by the carried anomalous region label. The server may perform anomalous region comparison according to the anomalous region label carried in the anomalous sample image and the second pixel anomaly result, and obtain the second pixel anomaly detection loss of the anomalous sample image according to a comparison result. The server may obtain the pixel anomaly detection loss based on the first pixel anomaly detection loss and the second pixel anomaly detection loss. For example, the server may perform summation on the first pixel anomaly detection loss and the second pixel anomaly detection loss, to obtain the pixel anomaly detection loss.

Further, the continuing to perform training after updating the image anomaly detection model based on the sample reconstruction loss and the sample restoration loss until training is completed, to obtain the image anomaly detection model on which training is completed includes: fusing the sample reconstruction loss, the sample restoration loss, and the pixel anomaly detection loss, to obtain a model loss; and continuing to perform training after updating the image anomaly detection model based on the model loss until training is completed, to obtain the image anomaly detection model on which training is completed.

The pixel anomaly detection loss reflects an anomalous detection result at a pixel level. The model loss is obtained based on the sample reconstruction loss, the sample restoration loss, and the pixel anomaly detection loss, and the model loss is configured for updating the image anomaly detection model. Specifically, the server may fuse the sample reconstruction loss, the sample restoration loss, and the pixel anomaly detection loss. For example, weighted fusion may be performed on the sample reconstruction loss, the sample restoration loss, and the pixel anomaly detection loss according to a specified weight, to obtain the model loss. The server updates the model parameter of the image anomaly detection model based on the model loss, and continues to perform training based on the updated image anomaly detection model until training is completed, to obtain the image anomaly detection model on which training is completed.

In some embodiments, the server further constructs the pixel anomaly detection loss at the pixel level based on the first sample feature difference and the third sample feature difference, and updates the image anomaly detection model based on the anomalous region label carried in the anomalous sample image, the sample reconstruction loss, the sample restoration loss, and the pixel anomaly detection loss, to obtain the model loss, and may perform model training from three dimensions, namely, feature reconstruction, feature restoration, and pixel-level anomaly detection, to ensure a generalization capability of the image anomaly detection model for image anomaly detection, thereby improving accuracy of image anomaly detection.

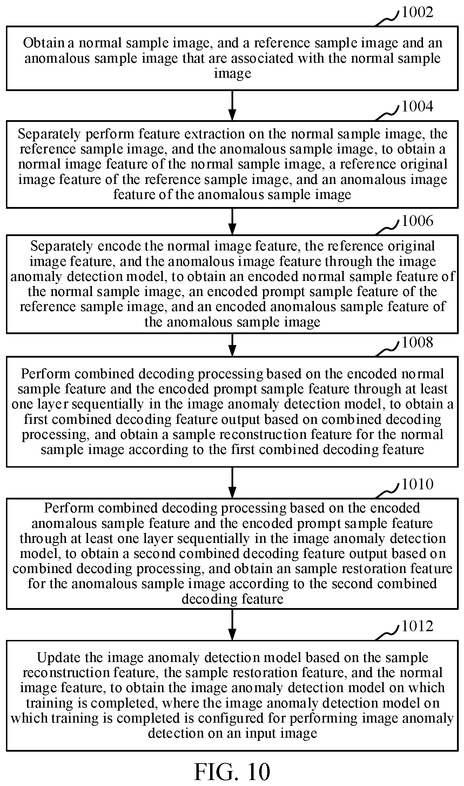

In an exemplary embodiment, as shown in FIG. 10, an image anomaly detection model processing method is provided. The method is performed by a computer device. Specifically, the method may be separately performed by a computer device such as a terminal or a server, or may be jointly performed by the terminal and the server. in some embodiments of the present disclosure, descriptions are provided by using an example in which the method is applied to the server in FIG. 1, and the method includes the following operation 1002 to operation 1012.

Operation 1002: Obtain a normal sample image, and a reference sample image and an anomalous sample image that are associated with the normal sample image.

The image anomaly detection model may be obtained through construction based on various artificial neural network algorithms. The normal sample image is a sample image including no image anomaly. The reference sample image is associated with the normal sample image. The reference sample image is used as a sample image for reference. An image feature carried in the reference sample image is used as a prompt feature to provide training guidance for the image anomaly detection model. The anomalous sample image is a sample image including an image anomaly. The normal sample image, the reference sample image, and the anomalous sample image are specifically sample images belonging to a same application scenario, and a difference lies only in whether there is an anomaly in image content, for example, whether there is anomalous content such as a loss, a scratch, or decay. Specifically, the server may obtain sample images for the image anomaly detection model, including the normal sample image, the reference sample image, and the anomalous sample image.

Operation 1004: Separately perform feature extraction on the normal sample image, the reference sample image, and the anomalous sample image, to obtain a normal image feature of the normal sample image, a reference original image feature of the reference sample image, and an anomalous image feature of the anomalous sample image.

For example, the server may separately perform feature extraction on the normal sample image, the reference sample image, and the anomalous sample image. For example, the server may separately perform feature extraction on the normal sample image, the reference sample image, and the anomalous sample image through the pre-trained feature extraction network, to obtain respective original image features, which specifically include the normal image feature of the normal sample image, the reference original image feature of the reference sample image, and the anomalous image feature of the anomalous sample image.

Operation 1006: Separately encode the normal image feature, the reference original image feature, and the anomalous image feature through the image anomaly detection model, to obtain an encoded normal sample feature of the normal sample image, an encoded prompt sample feature of the reference sample image, and an encoded anomalous sample feature of the anomalous sample image.

Specifically, the server may encode the sample image through the image anomaly detection model, to obtain respective encoding features, which specifically include the encoded normal sample feature of the normal sample image, the encoded prompt sample feature of the reference sample image, and the encoded anomalous sample feature of the anomalous sample image.

Operation 1008: Perform combined decoding processing based on the encoded normal sample feature and the encoded prompt sample feature through at least one layer sequentially in the image anomaly detection model, to obtain a first combined decoding feature output based on combined decoding processing, and obtain a sample reconstruction feature for the normal sample image according to the first combined decoding feature.

In some embodiments, the server may perform combined decoding processing through the image anomaly detection model and by using a feature combination of the encoded normal sample feature and the encoded prompt sample feature, to obtain the corresponding sample reconstruction feature. In each layer of combined decoding processing, in the image anomaly detection model, attention feature extraction is performed on the encoded detection feature and the encoded prompt feature that are input in the current layer, to obtain the encoded prompt feature output in the current layer; and attention feature extraction is performed on the encoded prompt feature and the encoded detection feature that are output in the current layer, to obtain the encoded detection feature output in the current layer.

Operation 1010: Perform combined decoding processing based on the encoded anomalous sample feature and the encoded prompt sample feature through at least one layer sequentially in the image anomaly detection model, to obtain a second combined decoding feature output based on combined decoding processing, and obtain a sample restoration feature for the anomalous sample image according to the second combined decoding feature.

In some embodiments, the server may perform combined decoding processing through the image anomaly detection model and by using a feature combination of the encoded anomalous sample feature and the encoded prompt sample feature, to obtain the corresponding sample restoration feature. In each layer of combined decoding processing, in the image anomaly detection model, attention feature extraction is performed on the encoded detection feature and the encoded prompt feature that are input in the current layer, to obtain the encoded prompt feature output in the current layer; and attention feature extraction is performed on the encoded prompt feature and the encoded detection feature that are output in the current layer, to obtain the encoded detection feature output in the current layer.

Operation 1012: Update the image anomaly detection model based on the sample reconstruction feature, the sample restoration feature, and the normal image feature, to obtain the image anomaly detection model on which training is completed, where the image anomaly detection model on which training is completed is configured for performing image anomaly detection on an input image.

Specifically, the server may construct a model loss through the sample reconstruction feature, the sample restoration feature, and the normal image feature, to update a model parameter of the image anomaly detection model based on the model loss, and then continue to perform training until training is completed, to obtain the image anomaly detection model on which training is completed. A training end condition may be set according to an actual requirement, for example, training is performed a preset quantity of times, accuracy of the image anomaly detection model satisfies the end condition, or all sample images are trained.

According to the image anomaly detection model processing method, for the normal sample image, and the reference sample image and the anomalous sample image that are associated with the normal sample image, respective original image features are respectively encoded through the image anomaly detection model, to obtain the encoded normal sample feature, the encoded prompt sample feature, and the encoded anomalous sample feature. Combined decoding processing through at least one layer is performed based on the encoded normal sample feature and the encoded prompt sample feature through the image anomaly detection model, to construct the sample reconstruction feature for the normal sample image. Combined decoding processing through at least one layer is performed based on the encoded anomalous sample feature and the encoded prompt sample feature through the image anomaly detection model, to construct the sample restoration feature for the anomalous sample image. Then, training continues to be performed on the image anomaly detection model based on the sample reconstruction feature, the sample restoration feature, and the normal image feature, to obtain the image anomaly detection model, on which training is completed, that is configured for performing image anomaly detection on the input image. The encoded prompt sample feature is introduced to perform combined decoding processing through at least one layer based on the encoded normal sample feature, to perform feature reconstruction on the normal sample image, and the encoded prompt sample feature is introduced to perform combined decoding processing through at least one layer based on the encoded anomalous sample feature, to perform feature restoration on the anomalous sample image. An image anomaly detection capability of the image anomaly detection model can be enhanced by using image context information of the reference sample image and a dynamic encoded prompt feature corresponding to each layer, thereby improving accuracy of performing image anomaly detection on the input image based on the trained image anomaly detection model.

In an exemplary embodiment, the continuing to perform training until training is completed after updating the image anomaly detection model based on the sample reconstruction feature, the sample restoration feature, and the normal image feature, to obtain the image anomaly detection model on which training is completed includes: determining a sample reconstruction loss according to a sample feature difference between the sample reconstruction feature and the normal image feature; determining a sample restoration loss according to a second sample feature difference between the sample restoration feature and the normal image feature; and continuing to perform training after updating the image anomaly detection model based on the sample reconstruction loss and the sample restoration loss until training is completed, to obtain the image anomaly detection model on which training is completed.

Specifically, the server may determine the sample feature difference between the sample reconstruction feature and the normal image feature. For example, the server may perform feature comparison on the sample reconstruction feature and the normal image feature, to obtain the sample feature difference, and construct the sample reconstruction loss based on the sample feature difference. Similarly, the server may perform feature comparison on the sample restoration feature and the normal image feature, to obtain the second sample feature difference, and construct the sample restoration loss based on the second sample feature difference. Forms of the sample reconstruction loss and the sample restoration loss may be set according to an actual requirement. The server may obtain a model loss according to a sum or a weighted sum of the sample reconstruction loss and the sample restoration loss, and update the image anomaly detection model based on the model loss.

In some embodiments, the server determines the sample reconstruction loss based on the sample feature difference between the sample reconstruction feature and the normal image feature, determines the sample restoration loss based on the second sample feature difference between the sample restoration feature and the normal image feature, and performs model updating based on both the sample reconstruction loss and the sample restoration loss, so that model training can be performed from two dimensions, namely, feature reconstruction and feature restoration, to ensure a generalization capability of the image anomaly detection model for image anomaly detection, thereby improving accuracy of image anomaly detection.

In an exemplary embodiment, the image anomaly detection model processing method further includes: separately determining a first sample feature difference between the sample reconstruction feature and the normal image feature, and determining a third sample feature difference between the sample restoration feature and the anomalous image feature; separately performing pixel feature extraction on the first sample feature difference and the third sample feature difference through the image anomaly detection model, to obtain a first pixel anomaly result and a second pixel anomaly result; and determining a pixel anomaly detection loss according to an anomalous region label carried in the anomalous sample image, the first pixel anomaly result, and the second pixel anomaly result; and the continuing to perform training after updating the image anomaly detection model based on the sample reconstruction loss and the sample restoration loss until training is completed, to obtain the image anomaly detection model on which training is completed includes: fusing the sample reconstruction loss, the sample restoration loss, and the pixel anomaly detection loss, to obtain a model loss; and continuing to perform training after updating the image anomaly detection model based on the model loss until training is completed, to obtain the image anomaly detection model on which training is completed.

For example, the server may perform absolute element-wise subtraction on the sample reconstruction feature and the normal image feature, and perform absolute element-wise subtraction on the sample restoration feature and the anomalous image feature, to obtain the first sample feature difference and the third sample feature difference. The server separately performs pixel feature extraction through at least one layer, such as a convolution operation, normalization processing, linear rectification, and deconvolution on the first sample feature difference and the third sample feature difference through the image anomaly detection model, to separately obtain the first pixel anomaly result and the second pixel anomaly result. The server constructs the pixel anomaly detection loss based on the anomalous region label, the first pixel anomaly result, and the second pixel anomaly result. in some embodiments, the server may obtain through construction the pixel anomaly detection loss in a selected loss function form and according to the anomalous region label, the first pixel anomaly result, and the second pixel anomaly result. A form of the loss function may be flexibly set according to an actual requirement.

Further, the server may perform weighted fusion on the sample reconstruction loss, the sample restoration loss, and the pixel anomaly detection loss according to a specified weight, to obtain the model loss, update the model parameter of the image anomaly detection model based on the model loss, and continue to perform training based on the updated image anomaly detection model until training is completed, to obtain the image anomaly detection model on which training is completed.

In some embodiments, the server further constructs the pixel anomaly detection loss at the pixel level based on the first sample feature difference and the third sample feature difference, and updates the image anomaly detection model based on the anomalous region label carried in the anomalous sample image, the sample reconstruction loss, the sample restoration loss, and the pixel anomaly detection loss, to obtain the model loss. The server may perform model training from three dimensions, namely, feature reconstruction, feature restoration, and pixel-level anomaly detection, to ensure a generalization capability of the image anomaly detection model for image anomaly detection, thereby improving accuracy of image anomaly detection. The present disclosure further provides an application scenario. The application scenario is applied to the foregoing image anomaly detection method. Specifically, application of the image anomaly detection method in the application scenario is as follows:

For image anomaly detection processing, currently, there is an unsupervised anomaly detection method based on reconstruction and an anomaly detection method based on a text prompt. For the unsupervised anomaly detection method based on reconstruction, it is assumed that an anomalous image region or feature cannot be correctly reconstructed because the anomalous image region or feature does not exist in a normal training sample. In some methods, a normal image is reconstructed by using a generation model, for example, an autoencoder and a generation confrontation network. Robust GAN-inversion (RGI) provides robust generative adversarial network (GAN) inversion, which can restore any input image (even if seriously damaged) to a clean image, and recognize a damaged region mask by resolving an optimization problem thereof. In some methods, anomaly detection is considered as an image restoration problem, where a patch of an image is partially covered. A part of image regions are randomly deleted through region-based image anomaly detection (RIAD), and an image of a deleted region is reconstructed by using a convolutional neural network and a non-deleted part. A spatial and channel-wise pixel-wise anomaly block (SSPCAB) learns to reconstruct a masking region by using context information with a masked convolution kernel. To enhance reconstruction diversity and avoid unexpected anomaly generalization, a pyramid deformation module is proposed to model different normal lines and measure severity of anomaly. However, these methods usually have relatively high calculation costs because these methods relate to reconstruction in an original image space. A unified model for anomaly detection (UniAD) extracts a feature from a pre-trained model and reconstructs the feature, which implements unified anomaly detection and can take both efficiency and performance into consideration. However, UniAD is still unsatisfactory in terms of pixel-level anomaly segmentation.

For an anomaly detection method based on a text prompt, use of a large pre-trained visual language model (for example, Contrast Language-Image Pre-training, CLIP) has shown unprecedented versatility, and achieves impressive performance on various tasks, such as image classification with few samples, open word detection, and text-to-image generation. On a powerful CLIP model, a plurality of text prompts may be used to generate excellent performance in terms of zero-sample and few-sample anomaly detection. In addition, through application of a multi-round dialog anomaly GPT (Anomaly Generative Pre-Trained Transformer), existence and a position of an anomaly are indicated, and detailed descriptions of an anomaly in a test image are further provided. However, in these methods, an anomaly is recognized mainly relying on the text prompt, and a workload of constructing a text prompt for an image is relatively large, affecting processing efficiency of image anomaly detection. However, according to the image anomaly detection method provided in some embodiments, an anomaly is detected by using a normal image as a visual prompt, which is more intuitive and facilitates improving accuracy and processing efficiency of image anomaly detection.

For processing of image anomaly detection, an unsupervised reconstruction method of a Transformer based on a self-attention mechanism has achieved a current best result in unified (single model and multi-category) anomaly detection. However, these self-attention-based reconstruction models are mainly configured for performing an operation on a feature, and an anomaly may have relatively high consistency with context. Consequently, both a normal feature and an anomalous feature can be perfectly reconstructed, resulting in failed detection on a real anomaly. To ensure high efficiency of a reconstruction process, network reconstruction is usually performed in a latent space with a low resolution, but this causes typical poor performance of a model for anomaly positioning. To enable the reconstruction model to be highly efficient and enhance a generalization capability of the reconstruction model for anomaly detection, in the image anomaly detection method provided in some embodiments, a normal feature of a normal sample can be reconstructed and an anomalous feature of an anomalous sample can be restored to the normal feature by using only a prompt of one normal image. In the image anomaly detection method provided in some embodiments, reconstruction or restoration of an anomaly is allowed by using only a prompt of one normal image, thereby effectively improving anomaly detection performance. In addition, the image anomaly detection method provided in some embodiments further includes a supervised refining module, which regresses a reconstruction error by using a real normal image and a synthesized anomalous image, thereby significantly improving performance of pixel-level anomaly segmentation. The image anomaly detection method provided in some embodiments is better than a previous method in three anomaly detection reference data sets: MVTec, BTAD, and ViSA.

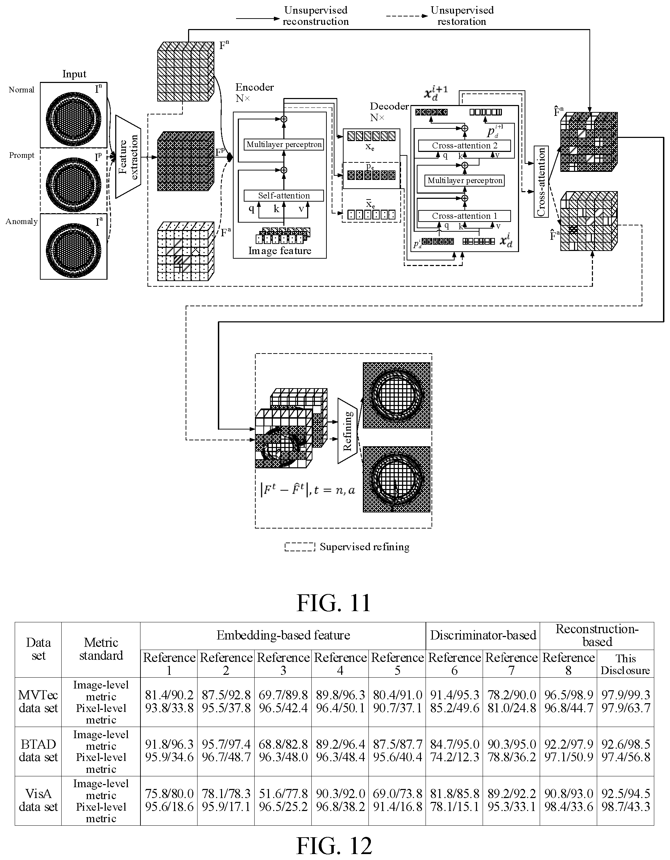

Specifically, FIG. 11 is a framework diagram configured for unified unsupervised anomaly detection in an image anomaly detection method provided in some embodiments. An input includes three types of images: a normal image (normal, *Iⁿ*), a prompt image (prompt, *I^{p}*), and an anomalous image (pseudo anomaly, *I^{a}*). The three types of images obtain respective original image features through a feature extraction network (Backbone), which include an image feature *Fⁿ* corresponding to the normal image, an image feature *F^{p}* corresponding to the prompt image, and an image feature *F^{a}* corresponding to the anomalous image. A solid line segment indicates unsupervised reconstruction processing, a dashed line segment indicates unsupervised restoration processing, and a dashed line box indicates supervised refining processing. The image feature corresponding to the normal image, the image feature corresponding to the prompt image, and the image feature corresponding to the anomalous image are respectively encoded through N encoders. Each encoder includes a self-attention layer and a multilayer perceptron layer (MLP) that are sequentially connected, to obtain an encoding feature *̅x̅*̅ₑ corresponding to the normal image, an encoding feature *x̅ₑ* of the prompt image, and an encoding feature *̅x̅*̅ₑ corresponding to the anomalous image.

For the unsupervised reconstruction processing, decoding processing is separately performed, through N decoders, on the encoding feature corresponding to the normal image and the encoding feature of the prompt image. Each decoder includes a cross-attention layer 1, a multilayer perceptron layer (MLP), and a cross-attention layer 2 that are sequentially connected. For the cross-attention layer 1, an encoded prompt feature ${\vec{p}}_{d}^{i - 1}$ output by a previous decoder is used as a query vector (q), a normal encoding feature ${\vec{x}}_{d}^{i - 1}$ output by the previous decoder is used as a key vector (k) and a value vector (v), and an output of the cross-attention layer 1 is input into the multilayer perceptron layer. For the cross-attention layer 2, a normal encoding feature ${\vec{x}}_{d}^{i - 1}$ output by a previous decoder is used as a query vector, an output of the multilayer perceptron layer is used as a key vector and a value vector, an output of the cross-attention layer 2 is an encoded prompt feature ${\vec{p}}_{d}^{i}$ output by a decoder in a current layer, an output of the multilayer perceptron layer is used as a normal encoding feature ${\vec{x}}_{d}^{i}$ output by the decoder in the current layer, and a reconstruction feature *F̂ⁿ* is obtained after an output of a last decoder passes through the cross-attention layer. Refining processing is performed on a reconstruction error between a reconstruction feature *F̂*ⁿ and an image feature *Fⁿ* corresponding to the normal image, to obtain a final output.

For the unsupervised restoration processing, features input into the decoder are an encoding feature of a prompt image and an encoding feature corresponding to an anomalous image, and a restoration feature *F̂*^{a} is obtained after an output of a last decoder passes through the cross-attention layer. Refining processing is performed on the restoration error between the restoration feature and the image feature *Fⁿ* corresponding to the normal image, to obtain the final output.

Further, in a training stage, both the normal image and a synthesized image are input into a pre-trained backbone network to extract multi-layer representation. Under guidance of the prompt of the normal image, a normal feature of a normal sample is reconstructed in an unsupervised reconstruction flow, and feature restoration is performed on a synthesized anomalous sample in an unsupervised restoration flow, so that a feature of the synthesized anomalous sample is restored to a normal feature. In addition, the supervised refining module is configured to regress a reconstruction error between the normal image and the synthesized anomalous image. The unsupervised restoration flow is cleared during reasoning, and therefore, no additional calculation overhead is caused.

Further, reconstruction processing is performed based on the prompt of the normal image. The image anomaly detection method provided in some embodiments focuses on unified anomaly detection, which means that one model is needed to process data of a plurality of categories. In comparison with the anomaly detection method of one type and one model, to-be-processed data in unified anomaly detection has more complex distribution, and therefore is more challenging. Using an encoding-decoding architecture UniAD is a powerful and state-of-the-art unified unsupervised anomaly detection solution. The UniAD includes neighborhood masked attention (NMA) and a layered query decoder (LQD). Due to limitation caused by the NMA, a feature and a neighborhood thereof cannot be viewed. Therefore, a context feature (long dependency) is used for reconstruction. In addition, learnable query embedding *q̅ⁱ⁻¹* is first integrated with encoder embedding *x̅ₑ,* and is then integrated with the output ${\vec{x}}_{d}^{i - 1}$ into an i^{th} decoder layer. Experiments prove that learned query embedding can relieve overfitting.

For simplicity, a multilayer perceptron (MLP), a residual connection, layer normalization, and dropout in the LQD are omitted. Then, in an i^{th} module of the LQD, corresponding two important operations are processed as shown in the following Formula (1) and Formula (2): $\vec{q} ′ = softmax \left({\vec{q}}^{i - 1}{\vec{x}}_{e}^{T}/\sqrt{c}\right) {\vec{x}}_{e}$ ${\vec{x}}_{d}^{i} = softmax \left(\vec{q}′{\vec{{x}_{d}^{i - 1}}}^{T}/\sqrt{c}\right) {\vec{x}}_{d}^{i - 1}$

*softmax()* is attention feature fusion processing, ${\vec{x}}_{e}^{T}$ is a transpose matrix of *x̅ₑ, c* is a dimension of *x̅ₑ,* ${\vec{x}}_{d}^{0}$ is obtained by initialization of *x̅ₑ* of a 1^{st} block in the LQD, and ${\vec{x}}_{d}^{i}$ is an output of the i^{th} module. The foregoing LQD may be implemented through multi-head self-attention. In each sub-block of the LQD, q̅ⁱ⁻¹ is parameterized and learnable, but *x̅ₑ* remains fixed and unchanged, that is, the LQD merely autonomously reconstructs features. This may fail in the face of a challenging scenario (such as a pseudo anomaly).

In the image anomaly detection method provided in some embodiments, it is expected that feature reconstruction relies on a structure and a feature, and a normal prompt can be used as a guide, to reduce reconstruction difficulty and improve anomaly detection performance. A simple manner is to directly replace the query q̅jⁱ⁻¹ embedded in the LQD with an encoder output *q̅ⁱ⁻¹* of a common image prompt *I^{p},* to enable interaction between the prompt and a feature. Therefore, the LQD is converted into the following Formula (3) and Formula (4): $\vec{q} ′ = softmax \left({\vec{p}}_{e}{\vec{x}}_{e}^{T}/\sqrt{c}\right) {\vec{x}}_{e}$ ${\vec{x}}_{d}^{i} = softmax \left(\vec{q}′{\vec{{x}_{d}^{ι - 1}}}^{T}/\sqrt{c}\right) {\vec{x}}_{d}^{i - 1}$

This change is very simple, but has a completely different meaning, and can significantly improve anomaly detection performance. In the foregoing modification, the encoded prompt feature statically interacts with the feature in a unidirectional manner. Therefore, the encoded prompt feature is referred to as a unidirectional decoder with a static prompt. However, such a unidirectional mode may not be flexible enough, and especially when the feature is continuously updated, the unidirectional mode may not be aligned with the feature.

Different from the static prompt in the unidirectional decoder, in the image anomaly detection method provided in some embodiments, a pair of bidirectional cross-attention dynamic update prompts and a feature are used, as shown in the following Formula (5) and Formula (6): ${\vec{p}}_{d}^{i} = softmax \left({\vec{p}}_{d}^{i - 1}{{\vec{x}}_{d}^{i - 1}}^{{}^{T}}/\sqrt{c}\right) {\vec{x}}_{d}^{i - 1}$ ${\vec{x}}_{d}^{i} = softmax \left({\vec{x}}_{d}^{i - 1}{{\vec{p}}_{d}^{i}}^{{}^{T}}/\sqrt{c}\right) {\vec{p}}_{d}^{i}$${\vec{p}}_{d}^{0}$ and ${\vec{p}}_{d}^{0}$ are obtained by performing initialization on p̅ₑ and x̅ₑ in the encoder module. The foregoing bidirectional decoder with the dynamic prompt simulates bidirectional feature interaction, including prompt to feature and feature to prompt. Interaction performed the first time starts from the prompt (used as query) to the cross-attention of the feature, and interaction performed the second time starts from the feature (used as query) to another cross-attention of the prompt. A next decoder block obtains an updated prompt and a feature from a previous block. In this way, the feature reconstruction not only uses context information thereof, but also dynamically uses a corresponding normal prompt. Such a bidirectional modeling manner further enhances flexibility of the prompt feature, and can adapt to a distribution change of the feature to some extent. Finally, a prompt for an output of the bidirectional decoder is updated by using one cross-attention, and an output thereof is considered as a reconstruction feature (F̂*ⁿ*) of an original feature *Fⁿ*. A mean squared error (MSE) between the reconstruction feature and the original feature is calculated by using the reconstruction loss function. Details are shown in the following Formula (7): ${L}_{rec} = \frac{1}{c \times h \times w} {\sum }_{i = 1}^{c} {\sum }_{j = 1}^{h} {{\sum }_{k = 1}^{w} \left({F}_{i , j , k}^{n}-{\hat{F}}_{i , j , k}^{n}\right)}^{2}$

*L*_{rec} is a reconstruction loss, *c* is an image channel, *h* is an image height, and *w* is an image width.

Further, restoration processing is performed based on a normal image prompt. Unsupervised reconstruction learning is performed only on a normal training image, which may cause the model to depend on context information of the model more and weaken a participation degree of an image prompt in a reconstruction process. To further enhance guidance of the image prompt, an expected manner is to increase difficulty of a reconstruction task, to force a network to not only rely on context information of the network, but also rely on prompt information of the normal image prompt. To achieve this objective, in the image anomaly detection method provided in some embodiments, an artificially synthesized pseudo anomaly image *I^{a}* is introduced, which may be easily generated by adding damage to a normally trained image *Iⁿ*, for example, CutPaste and a discriminately trained reconstruction anomaly embedding model (DRAEM). Based on the pseudo anomaly image, the previous reconstruction may be converted into a restoration problem, and it is expected to restore the anomaly feature *F^{a}* to the normal feature *Fⁿ* under guidance of the normal image prompt *I^{p}.* This restoration manner is consistent with expectation of the reconstruction model at a testing stage.

Similar to the reconstruction process, in the image anomaly detection method provided in some embodiments, first, a pair of images *(I^{a}* and *I^{p})* are input into a pre-trained backbone, to extract offline features (*F^{a}* and *F^{p}),* then a finally restored feature *F̂^{a}* is obtained, and offline paired features are sequentially applied to the self-attention encoder and the bidirectional cross-attention decoder. Specifically, the self-attention encoder concurrently uses *F^{a}* and *F^{p}* as an input, and an output is *x̅ₑ* and p̅ₑ. Next, the bidirectional decoder is initialized by ${\vec{\overline{x}}}_{e}$ and *p̅ₑ,* and is dynamically updated. In an i^{th} block of the bidirectional decoder, the dynamic feature and the prompt are represented as ${\vec{\overline{x}}}_{d}^{i}$ and ${\vec{p}}_{d}^{i}$*,* which can be easily obtained by replacing ${\vec{x}}_{d}^{i}$ with ${\vec{\overline{x}}}_{d}^{i}$*.* Different from the function in the unsupervised reconstruction, a restored feature *(F̂^{a})* and a corresponding original normal feature *(Fⁿ)* are calculated by using the restoration loss function. Details are shown in the following Formula (8): ${L}_{res} = \frac{1}{c \times h \times w} {\sum }_{i = 1}^{c} {\sum }_{j = 1}^{h} {\sum }_{k = 1}^{w} {\left({F}_{i , j , k}^{n}-{\hat{F}}_{i , j , k}^{a}\right)}^{2}$

*Lᵣₑₛ* is a restoration loss.

For the supervised refining module, a normal training image *Iⁿ* and a corresponding anomaly mask *Mⁿ* (all elements are zero) are given, an anomaly image *I^{a}* may be synthesized, and the anomaly mask of the anomaly image is represented as *M^{a}.* Then, the normal image and the synthesized image *{I^{t}}_{t=n,a}* are fed to a pre-trained backbone network, and offline representation *{F^{t}}_{t=n,a}* of the normal image and the synthesized image is exported. Then, normal *Fⁿ* is reconstructed as *F̂ⁿ* by using the proposed reconstruction flow, and anomalous *F^{a}* is restored as *F̂^{a}* by using the suggested restoration flow. Absolute element-wise subtraction between the original feature and the reconstruction (restored) feature is used to measure a difference between the original feature and the reconstruction (restored) feature. Details are shown in the following Formula (9): ${E}^{t} = \left|{F}^{t}-{\hat{F}}^{t}\right| , t = n , a$

In fact, an L₂ norm of a difference *E^{t}* in the equation may be used to roughly position an anomalous region. However, in this manner, because feature reconstruction or restoration is performed in a latent space with a low resolution (namely, 1/16 of an original input), it is very difficult to accurately position the anomalous region.

The synthesized anomaly image *I^{a}* naturally carries a pixel-level anomaly mask *M^{a}.* The image anomaly detection method provided in some embodiments is expected to fully use *M^{a}* to further refine a reconstruction error from a low resolution to a high resolution. Therefore, according to the image anomaly detection method provided in some embodiments, a lightweight pixel-level refining module based on a reconstruction error is designed, to perform anomaly segmentation. The module includes several transpose convolution blocks, and is immediately followed by one 1x1 convolution layer. Each transpose convolution block upsamples a reconstruction error E^{t} by two times, and includes 3x3 convolution, batch normalization (BatchNorm), a rectified linear unit (ReLU), and 2x2 deconvolution. During experiment, in the image anomaly detection method provided in some embodiments, two transpose convolution blocks are used, thereby enhancing a reconstruction error from 1/16 to 1/4 relative to an input image. Finally, the 1x1 convolution layer converts a channel quantity of the enlarged reconstruction error into 1, and obtains an estimated anomaly image *M̂^{t}.* To calculate a loss between *M̂^{t}* and a real value *M^{t},* a resolution of *M̂^{t}* is further adjusted to a resolution of *M^{t}.* Considering that an anomaly pixel usually accounts for a minority in anomaly detection, the model is optimized by using a dice loss function, which is very effective for learning from extremely imbalanced data. Details are shown in the following Formula (10): ${L}_{seg} = 1 - \frac{2 ⋅ {\sum }_{i = 1}^{H} {\sum }_{j = 1}^{W} {\hat{M}}_{i , j}^{t} ⋅ {M}_{i , j}^{t}}{{\sum }_{i = 1}^{H} {\sum }_{j = 1}^{W} {\left({\hat{M}}_{i , j}^{t}\right)}^{2} {\sum }_{i = 1}^{H} {\sum }_{j = 1}^{W} {\left({M}_{i , j}^{t}\right)}^{2}}$

*(i, j)* represents a spatial position in *M^{t}* or *M̂^{t};* and *L_{seg}* is a refining loss, *H* is a height of *M^{t}* or *M̂^{t},* and *M̂^{t}* is a width of *M^{t}* or *M̂^{t}.*

For training and reasoning processing, considering that the proposed solution relates to three objectives, including unsupervised reconstruction, unsupervised restoration, and supervised refining, the overall training loss function is shown in the following Formula (11): $L = {L}_{rec} + {L}_{res} + {λL}_{seg}$

λ > 0 is a weight balancing importance of two types of loss functions *L_{rec} + Lᵣₑₛ* and *L_{seg}.* During reasoning, offline prompt features of all categories are pre-extracted and stored into a prompt pool. A test image I and a feature F of the test image are given, and an optimal prompt feature is selected by using a cosine similarity between the feature and the prompt pool. For unsupervised reconstruction, an anomalous score map is calculated as an *L₂* norm of a reconstruction error. Details are shown in the following Formula (12): ${S}_{rec} = {\left‖F-\hat{F}\right‖}_{2} ∈ {ℝ}^{h \times w}$

*S*_{rec} is an unsupervised and reconstructed anomalous score map.

For a supervised refiner, the anomalous score map is predicted as $\hat{M} ∈ {ℝ}^{H \times W}$. Finally, S_{rec} (adjusted to an original resolution) and M̂ are combined together as a final anomalous segmentation image. Details are shown in the following Formula (13): $S = \left(1-α\right) ⋅ {S}_{rec} + α ⋅ \hat{M}$

*α* ∈ [0,1] is a weight, and anomaly classification is intended to detect whether an image includes an anomalous region. In the image anomaly detection method provided in some embodiments, a maximum value of *S* is used as an image-level anomaly score.

In a specific application, for data sets such as MVTec, BTAD, and VisA, receiver operating characteristics (ROCs)/precision-recall (PR) metrics of image-level anomaly classification and pixel-level anomaly segmentation are compared. All methods are evaluated under uniform settings, and a result is an average value of a plurality of categories.

FIG. 12 shows a table of comparison between image anomaly detection results of three different data sets, and specifically, the results are obtained by comprehensively evaluating a current representative method based on image-level classification and pixel-level segmentation on three anomaly detection data sets (MVTec, BTAD, and VisA). A metric standard includes an image-level metric and a pixel-level metric. The image-level metric may include an ROC/PR metric (I-ROC/PR) of image-level anomaly classification, and the pixel-level metric may include an ROC/PR metric (P-ROC/PR) of pixel-level anomaly segmentation. Image anomaly detection methods of references may include an embedding-based image anomaly detection method, a discriminator-based image anomaly detection method, and a reconstruction-based image anomaly detection method. The embedding-based image anomaly detection method may include a reference 1 (cross-scale flow, CS-Flow), a reference 2 (patch distribution modeling, PaDiM), a reference 3 (distribution-based feature matching, DFM), a reference 4 (PatchCore), and a reference 5 (contextual feature analysis, CFA). The discriminator-based image anomaly detection method may include a reference 6 (DRAEM) and a reference 7 (SimpleNet). The reconstruction-based image anomaly detection method includes a reference 8 (UniAD) and the image anomaly detection method in this solution. Specifically, some important observation is summarized as follows:

When a single-model and single-category method is extended to a single-model and multi-category method, most state-of-the-art methods suffer significant performance degradation in terms of image-level classification and pixel-level segmentation, which is also consistent with an observation result of UniAD. For example, a state-of-the-art SimpleNet decreases by about 21% (from 99.6% to 78.2%) on the I-ROC metric, and decreases by about 17% (from 98.1% to 81.0%) on the P-ROC metric.

The image anomaly detection method provided in some embodiments defeats all competitors, and is greatly superior to the state-of-the-art UniAD in terms of pixel-level anomaly segmentation on all three data sets, for example, is enhanced from 44.7% to 63.7% on MVTec, from 50.9% to 56.8% on BTAD, and from 33.6% to 43.3% on VisA.

Some methods are not robust to different application scenarios, and the image anomaly detection method provided in some embodiments is always better than a current best method. For example, DRAEM achieves 49.6% of P-PR on MVTec, but achieves only 12.3% on BTAD, and achieves only 15.1% on VisA.

For image-level anomaly classification, the image anomaly detection method provided in some embodiments also goes beyond UniAD in most cases, for example, improves I-ROC performance on MVTec from 96.5% to 97.9%, and improves I-ROC performance on VisA from 90.8% to 92.5%.

Although the operations in the flowcharts involved in the embodiments are displayed sequentially according to instructions of arrows, these operations are not necessarily performed sequentially according to a sequence instructed by the arrows. Unless clearly specified in this specification, there is no strict sequence limitation on the execution of the operations, and the operations may be performed in another sequence. Moreover, at least some of the operations in the flowchart related to the embodiments may include a plurality of operations or a plurality of stages. The operations or stages are not necessarily performed at the same moment but may be performed at different moments. The operations or stages are not necessarily performed sequentially, but may be performed in turn or alternately with another operation or at least some of operations or stages of the another operation.

Based on the same inventive concept, an embodiment of the present disclosure further provides an image anomaly detection apparatus configured to implement the foregoing image anomaly detection method. An implementation solution provided by the apparatus for resolving a problem is similar to the implementation solution recorded in the foregoing method. Therefore, for specific limitations on one or more embodiments of the image anomaly detection apparatus provided below, refer to the limitations on the foregoing image anomaly detection method. Details are not described herein again.

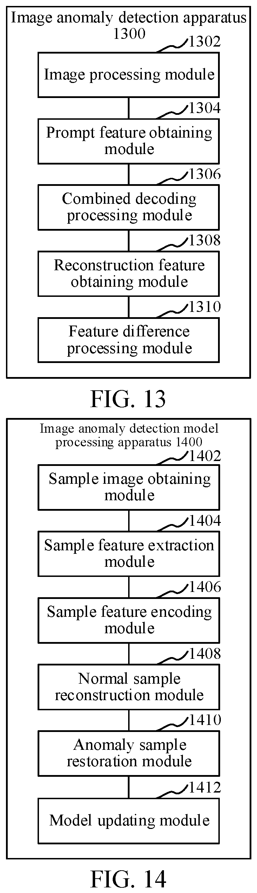

In an exemplary embodiment, as shown in FIG. 13, an image anomaly detection apparatus 1300 is provided, including: an image processing module 1302, a prompt feature obtaining module 1304, a combined decoding processing module 1306, a reconstruction feature obtaining module 1308, and a feature difference processing module 1310.

The image processing module 1302 is configured to obtain an image; extract an original image feature of the image; and encode the original image feature to obtain an encoded detection feature of the image;
the prompt feature obtaining module 1304 is configured to determine an original prompt feature from a reference image associated with the image, and encode the original prompt feature to obtain an encoded prompt feature, the reference image comprising no anomaly;
the combined decoding processing module 1306 is configured to perform combined decoding processing based on the encoded detection feature and the encoded prompt feature, through at least one layer sequentially in an image anomaly detection model, to obtain a combined decoding feature, wherein through a layer of the at least one layer, attention feature extraction is performed on an input encoded detection feature and an input encoded prompt feature, to obtain an output encoded prompt feature; and attention feature extraction is performed on the output encoded prompt feature and the input encoded detection feature, to obtain an output encoded detection feature;
the reconstruction feature obtaining module 1308 is configured to extract a reconstruction feature of the image from the combined decoding feature; and
the feature difference processing module 1310 is configured to determine a feature difference between the reconstruction feature and the original image feature to obtain an anomalous detection result of the image.

In some embodiments, the combined decoding processing module 1306 is further configured to obtain a first key feature and a first value feature according to the input encoded detection feature, and obtaining a first query feature according to the input encoded prompt feature; and perform cross-attention feature extraction on the first key feature, the first value feature, and the first query feature, to obtain the output encoded prompt feature.

In some embodiments, the combined decoding processing module 1306 is further configured to perform cross-attention feature extraction based on an attention mechanism according to the first key feature, the first value feature, and the first query feature, to obtain a first cross-attention feature; fuse the first cross-attention feature and the first query feature, to obtain a fusion feature; perform multi-layer mapping on the fusion feature, to obtain a mapping feature; and fuse the mapping feature and the fusion feature, to obtain the output encoded prompt feature.

In some embodiments, the combined decoding processing module 1306 is further configured to obtain a second key feature and a second value feature according to the output encoded prompt feature, and obtain a second query feature according to the input encoded detection feature; and perform cross-attention feature extraction on the second key feature, the second value feature, and the second query feature, to obtain the output encoded detection feature.

In some embodiments, the combined decoding processing module 1306 is further configured to perform cross-attention feature extraction based on the attention mechanism according to the second key feature, the second value feature, and the second query feature, to obtain a second cross-attention feature; and fuse the second cross-attention feature and the second query feature, to obtain the output encoded detection feature.

In some embodiments, the at least one layer includes a plurality of layers; the combined decoding processing module 1306 is further configured to perform, in a first layer of the plurality of layers, attention feature extraction on the encoded detection feature and the encoded prompt feature that are input in the first layer, to obtain an encoded prompt feature output in the first layer, and perform attention feature extraction on the encoded prompt feature output in the first layer and the encoded detection feature, to obtain an encoded detection feature output in the first layer; and perform, in each layer starting from a second layer of the plurality of layers, combined decoding processing in the respective layer based on an encoded prompt feature and an encoded detection feature that are output in a layer previous to the respective layer, to obtain the encoded prompt feature and the encoded detection feature that are output in the respective layer.

In some embodiments, the reconstruction feature obtaining module 1308 is further configured to perform cross-attention feature extraction on an encoded detection feature and an encoded prompt feature that are comprised in the combined decoding feature, to obtain the reconstruction feature.

In some embodiments, the feature difference processing module 1310 is further configured to map the feature difference, to obtain an anomalous mapping parameter; and determine the anomalous detection result of the image based on the anomalous mapping parameter.

In some embodiments, the system further includes a pixel feature processing module, configured to perform pixel feature extraction on the feature difference, to obtain a pixel anomaly result; and the feature difference processing module 1310 is further configured to perform weighted fusion on the anomalous mapping parameter and the pixel anomaly result, to obtain an anomalous fusion result; and determine the anomalous detection result of the image according to the anomalous fusion result.

In some embodiments, the image processing module 1302 is further configured to perform attention feature encoding on the original image feature, to obtain the encoded detection feature of the image; and the prompt feature obtaining module 1304 is further configured to determine the original prompt feature from a prompt feature pool, the prompt feature pool comprising at least one candidate prompt feature extracted from reference images; and perform attention feature encoding on the original prompt feature, to obtain the encoded prompt feature.

In some embodiments, the prompt feature obtaining module 1304 is further configured to calculate feature similarity between the original image feature and each of the at least one candidate prompt feature in the prompt feature pool; and determine a candidate prompt feature with highest feature similarity as the original prompt feature.

In some embodiments, the image anomaly detection method is implemented through an image anomaly detection model; and further includes a model training module, configured to obtain a normal sample image, and a reference sample image and an anomalous sample image that are associated with the normal sample image; separately perform feature extraction on the normal sample image, the reference sample image, and the anomalous sample image, to obtain a normal image feature of the normal sample image, a reference image feature of the reference sample image, and an anomalous image feature of the anomalous sample image; separately encode the normal image feature, the reference image feature, and the anomalous image feature through the image anomaly detection model, to obtain an encoded normal sample feature of the normal sample image, an encoded prompt sample feature of the reference sample image, and an encoded anomalous sample feature of the anomalous sample image; perform combined decoding processing based on the encoded normal sample feature and the encoded prompt sample feature through at least one layer sequentially in the image anomaly detection model, to output a first combined decoding feature, and extract a sample reconstruction feature for the normal sample image from the first combined decoding feature; perform combined decoding processing based on the encoded anomalous sample feature and the encoded prompt sample feature through at least one layer sequentially in the image anomaly detection model, to output a second combined decoding feature, and extract a sample restoration feature for the anomalous sample image from the second combined decoding feature; and update parameters of the image anomaly detection model based on the sample reconstruction feature, the sample restoration feature, and the normal image feature, to obtain a trained image anomaly detection model.

In some embodiments, the model training module is further configured to determine a first sample feature difference between the sample reconstruction feature and the normal image feature, and determine a sample reconstruction loss according to the first sample feature difference; determine a second sample feature difference between the sample restoration feature and the normal image feature, and determine a sample restoration loss according to the second sample feature difference; and update the parameters of the image anomaly detection model based on the sample reconstruction loss and the sample restoration loss.

In some embodiments, the model training module is further configured to determine a third sample feature difference between the sample restoration feature and the anomalous image feature; separately perform pixel feature extraction on the first sample feature difference and the third sample feature difference, to obtain a first pixel anomaly result and a second pixel anomaly result; determine a pixel anomaly detection loss according to an anomalous region label carried in the anomalous sample image, the first pixel anomaly result, and the second pixel anomaly result; and fuse the sample reconstruction loss, the sample restoration loss, and the pixel anomaly detection loss, to obtain a model loss; and update the parameters of the image anomaly detection model based on the model loss.

All or a part of the modules in the foregoing image anomaly detection apparatus may be implemented by means of software, hardware, or a combination thereof. The foregoing modules may be built in or independent of a processor of a computer device in a hardware form, or may be stored in a memory of the computer device in a software form, so that the processor invokes and performs an operation corresponding to each of the foregoing modules.

Based on the same inventive concept, an embodiment of the present disclosure further provides an image anomaly detection model processing apparatus configured to implement the foregoing image anomaly detection model processing method. An implementation solution provided by the apparatus for resolving a problem is similar to the implementation solution recorded in the foregoing method. Therefore, for specific limitations on one or more embodiments of the image anomaly detection model processing apparatus provided below, refer to the limitations on the foregoing image anomaly detection model processing method. Details are not described herein again.

In an exemplary embodiment, as shown in FIG. 14, an image anomaly detection model processing apparatus 1400 is provided, including: a sample image obtaining module 1402, a sample feature extraction module 1404, a sample feature encoding module 1406, a normal sample reconstruction module 1408, an anomalous sample restoration module 1410, and a model updating module 1412.

The sample image obtaining module 1402 is configured to obtain a normal sample image, and a reference sample image and an anomalous sample image that are associated with the normal sample image;
the sample feature extraction module 1404 is configured to separately perform feature extraction on the normal sample image, the reference sample image, and the anomalous sample image, to obtain a normal image feature of the normal sample image, a reference image feature of the reference sample image, and an anomalous image feature of the anomalous sample image;
the sample feature encoding module 1406 is configured to separately encode the normal image feature, the reference image feature, and the anomalous image feature through the image anomaly detection model, to obtain an encoded normal sample feature of the normal sample image, an encoded prompt sample feature of the reference sample image, and an encoded anomalous sample feature of the anomalous sample image;
the normal sample reconstruction module 1408 is configured to perform combined decoding processing based on the encoded normal sample feature and the encoded prompt sample feature through at least one layer sequentially in the image anomaly detection model, to output a first combined decoding feature, and extract a sample reconstruction feature for the normal sample image from the first combined decoding feature;
the anomalous sample restoration module 1410 is configured to perform combined decoding processing based on the encoded anomalous sample feature and the encoded prompt sample feature through at least one layer sequentially in the image anomaly detection model, to output a second combined decoding feature, and extract a sample restoration feature for the anomalous sample image from the second combined decoding feature; and
the model updating module 1412 is configured to update parameters of the image anomaly detection model based on the sample reconstruction feature, the sample restoration feature, and the normal image feature, to obtain a trained image anomaly detection model, the trained image anomaly detection model being configured for performing image anomaly detection on an input image.

In some embodiments, the model updating module 1412 is further configured to determine a first sample feature difference between the sample reconstruction feature and the normal image feature, and determine a sample reconstruction loss according to the first sample feature difference; determine a second sample feature difference between the sample restoration feature and the normal image feature, and determine a sample restoration loss according to the second sample feature difference; and update the parameters of the image anomaly detection model based on the sample reconstruction loss and the sample restoration loss.

In some embodiments, the model updating module 1412 is further configured to
determine a third sample feature difference between the sample restoration feature and the anomalous image feature; separately perform pixel feature extraction on the first sample feature difference and the third sample feature difference, to obtain a first pixel anomaly result and a second pixel anomaly result; determine a pixel anomaly detection loss according to an anomalous region label carried in the anomalous sample image, the first pixel anomaly result, and the second pixel anomaly result; and fuse the sample reconstruction loss, the sample restoration loss, and the pixel anomaly detection loss, to obtain a model loss; and update the parameters of the image anomaly detection model based on the model loss.

All or a part of the modules in the foregoing image anomaly detection model processing apparatus may be implemented by means of software, hardware, or a combination thereof. The foregoing modules may be built in or independent of a processor of a computer device in a hardware form, or may be stored in a memory of the computer device in a software form, so that the processor invokes and performs an operation corresponding to each of the foregoing modules.

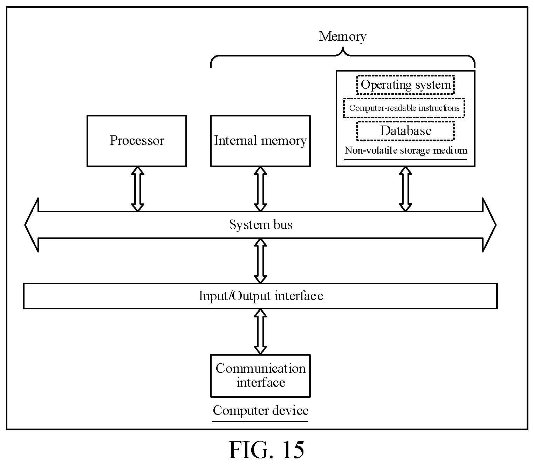

In an exemplary embodiment, a computer device is provided. The computer device may be a server or a terminal. A diagram of an internal structure of the computer device may be shown in FIG. 15. The computer device includes a processor, a memory, an input/output interface (I/O), and a communication interface. The processor, the memory, and the input/output interface are connected through the system bus, and the communication interface is connected to the system bus through the input/output interface. The processor of the computer device is configured to provide computing and control capabilities. The memory of the computer device includes a non-volatile storage medium and an internal memory. The non-volatile storage medium stores an operating system, computer-readable instructions, and a database. The internal memory provides an environment for running of the operating system and the computer-readable instructions in the non-volatile storage medium. The database of the computer device is configured to store image anomaly detection data. The input/output interface of the computer device is configured to exchange information between the processor and the external device. The communication interface of the computer device is configured to communicate with an external terminal through a network connection. When the computer-readable instructions are executed by a processor, an image anomaly detection method or an image anomaly detection model processing method is implemented.

A person skilled in the art may understand that, the structure shown in FIG. 15 is merely a block diagram of a part of a structure related to the solution of the present disclosure and does not limit the computer device to which the solution of the present disclosure is applied. Specifically, the computer device may include more or fewer components than those in the drawings, some components may be combined, or a different component deployment may be used.

In some embodiments, a computer device is further provided, including a memory and a processor. The memory has computer-readable instructions stored therein. The processor, when executing the computer-readable instructions, implements the operations in the foregoing method embodiments.

In some embodiments, a computer-readable storage medium is provided, having computer-readable instructions stored therein. When the computer-readable instructions are executed by a processor, the operations in the foregoing method embodiments are implemented.

In some embodiments, a computer program product is provided, including computer-readable instructions. When the computer-readable instructions are executed by a processor, the operations in the foregoing method embodiments are implemented.

User information (including but not limited to user device information, user personal information, and the like) and data (including but not limited to data for analysis, stored data, displayed data, and the like) involved in the present disclosure both are information and data that are authorized by users or fully authorized by all parties. Collection, use, and processing of related data need to comply with relevant regulations.

A person of ordinary skill in the art can understand that all or some of the processes of the methods in the foregoing embodiments may be implemented by computer-readable instructions instructing relevant hardware. The computer-readable instructions may be stored in a non-volatile computer-readable storage medium. When the computer-readable instructions are executed, the processes in the foregoing method embodiments may be implemented. Any reference to a memory, a database, or another medium used in the embodiments provided in the present disclosure may include at least one of a non-volatile memory and a volatile memory. The non-volatile memory may include a read-only memory (ROM), a magnetic tape, a floppy disk, a flash memory, an optical memory, a high-density embedded non-volatile memory, a resistive random access memory (ReRAM), a magnetoresistive random access memory (MRAM), a ferroelectric random access memory (FRAM), a phase change memory (PCM), a graphene memory, and the like. The volatile memory may include a random access memory (RAM) or an external cache memory. As a description and not a limit, the RAM may be in a plurality of forms, such as a static random access memory (SRAM) or a dynamic random access memory (DRAM). The databases involved in various embodiments provided in the present disclosure may include at least one of a relational database and a non-relational database. The non-relational database may include a blockchain-based distributed database, and the like, but is not limited thereto. The processors involved in the various embodiments provided in the present disclosure may be a general-purpose processor, a central processing unit, a graphics processor, a digital signal processor, a programmable logic device, a quantum computing-based data processing logic device, and the like, and are not limited thereto.

Technical features of the foregoing embodiments may be combined in different manners to form other embodiments. For concise descriptions, not all possible combinations of the technical features in the embodiments are described. However, provided that combinations of the technical features do not conflict with each other, the combinations of the technical features are considered as falling within this specification.

The foregoing embodiments show only several implementations of the present disclosure and are described in detail, which, however, are not to be construed as a limitation to the present disclosure. For a person of ordinary skill in the art, several transformations and improvements can be made without departing from the idea of the present disclosure. These transformations and improvements belong to the present disclosure. Therefore, the present disclosure shall be subject to the appended claims.

## Claims

1. An image anomaly detection method, executable by a computer device, and comprising:
obtaining an image; extracting an original image feature of the image; and encoding the original image feature to obtain an encoded detection feature of the image;
determining an original prompt feature from a reference image associated with the image, and encoding the original prompt feature to obtain an encoded prompt feature, the reference image comprising no anomaly;
performing combined decoding processing on the encoded detection feature and the encoded prompt feature, through at least one layer sequentially in an image anomaly detection model, to obtain a combined decoding feature, comprising:
through a layer of the at least one layer,
performing attention feature extraction on an input encoded detection feature and an input encoded prompt feature, to obtain an output encoded prompt feature; and
performing attention feature extraction on the output encoded prompt feature and the input encoded detection feature, to obtain an output encoded detection feature;
extracting a reconstruction feature of the image from the combined decoding feature; and
determining a feature difference between the reconstruction feature and the original image feature to obtain an anomalous detection result of the image.

2. The method according to claim 1, wherein the performing attention feature extraction on an input encoded detection feature and an input encoded prompt feature, to obtain an output encoded prompt feature comprises:
obtaining a first key feature and a first value feature according to the input encoded detection feature, and obtaining a first query feature according to the input encoded prompt feature; and
performing cross-attention feature extraction on the first key feature, the first value feature, and the first query feature, to obtain the output encoded prompt feature.

3. The method according to claim 2, wherein the performing cross-attention feature extraction on the first key feature, the first value feature, and the first query feature, to obtain the output encoded prompt feature comprises:
performing cross-attention feature extraction on the first key feature, the first value feature, and the first query feature, to obtain a first cross-attention feature;
fusing the first cross-attention feature and the first query feature, to obtain a fusion feature;
performing multi-layer mapping on the fusion feature, to obtain a mapping feature; and
fusing the mapping feature and the fusion feature, to obtain the output encoded prompt feature.

4. The method according to any one of claims 1 to 3, wherein the performing attention feature extraction on the output encoded prompt feature and the input encoded detection feature, to obtain an output encoded detection feature comprises:
obtaining a second key feature and a second value feature according to the output encoded prompt feature, and obtaining a second query feature according to the input encoded detection feature; and
performing cross-attention feature extraction on the second key feature, the second value feature, and the second query feature, to obtain the output encoded detection feature.

5. The method according to claim 4, wherein the performing cross-attention feature extraction on the second key feature, the second value feature, and the second query feature, to obtain the output encoded detection feature comprises:
performing cross-attention feature extraction on the second key feature, the second value feature, and the second query feature, to obtain a second cross-attention feature; and
fusing the second cross-attention feature and the second query feature, to obtain the output encoded detection feature.

6. The method according to any one of claims 1 to 5, wherein the at least one layer comprises a plurality of layers; and the combined decoding processing comprises:
performing, in a first layer of the plurality of layers, attention feature extraction on the encoded detection feature and the encoded prompt feature that are input in the first layer, to obtain an encoded prompt feature output in the first layer, and performing attention feature extraction on the encoded prompt feature output in the first layer and the encoded detection feature, to obtain an encoded detection feature output in the first layer; and
performing, in each layer starting from a second layer of the plurality of layers, combined decoding processing in the respective layer based on an encoded prompt feature and an encoded detection feature that are output in a layer previous to the respective layer, to obtain the encoded prompt feature and the encoded detection feature that are output in the respective layer.

7. The method according to any one of claims 1 to 6, wherein the extracting a reconstruction feature of the image from the combined decoding feature comprises:
performing cross-attention feature extraction on an encoded detection feature and an encoded prompt feature that are comprised in the combined decoding feature, to obtain the reconstruction feature.

8. The method according to any one of claims 1 to 7, wherein the determining a feature difference between the reconstruction feature and the original image feature to obtain an anomalous detection result of the image comprises:
mapping the feature difference to an anomalous mapping parameter; and
determining the anomalous detection result based on the anomalous mapping parameter.

9. The method according to claim 8, further comprising:
performing pixel feature extraction on the feature difference, to obtain a pixel anomaly result; and
the determining the anomalous detection result based on the anomalous mapping parameter comprises:
performing weighted fusion on the anomalous mapping parameter and the pixel anomaly result, to obtain an anomalous fusion result; and
determining the anomalous detection result according to the anomalous fusion result.

10. The method according to any one of claims 1 to 9, wherein the encoding the original image feature to obtain an encoded detection feature of the image comprises:
performing attention feature encoding on the original image feature, to obtain the encoded detection feature; and
the determining an original prompt feature from a reference image associated with the image, and encoding the original prompt feature to obtain an encoded prompt feature comprises:
determining the original prompt feature from a prompt feature pool, the prompt feature pool comprising at least one candidate prompt feature extracted from reference images; and
performing attention feature encoding on the original prompt feature, to obtain the encoded prompt feature.

11. The method according to claim 10, wherein the determining the original prompt feature from a prompt feature pool comprises:
calculating feature similarity between the original image feature and each of the at least one candidate prompt feature in the prompt feature pool; and
determining a candidate prompt feature with highest feature similarity as the original prompt feature.

12. The method according to any one of claims 1 to 11, wherein the method is implemented through the image anomaly detection model; and training the image anomaly detection model comprises:
obtaining a normal sample image, and a reference sample image and an anomalous sample image that are associated with the normal sample image;
separately performing feature extraction on the normal sample image, the reference sample image, and the anomalous sample image, to obtain a normal image feature of the normal sample image, a reference image feature of the reference sample image, and an anomalous image feature of the anomalous sample image;
separately encoding the normal image feature, the reference image feature, and the anomalous image feature through the image anomaly detection model, to obtain an encoded normal sample feature of the normal sample image, an encoded prompt sample feature of the reference sample image, and an encoded anomalous sample feature of the anomalous sample image;
performing combined decoding processing based on the encoded normal sample feature and the encoded prompt sample feature through at least one layer sequentially in the image anomaly detection model, to output a first combined decoding feature, and extracting a sample reconstruction feature for the normal sample image from the first combined decoding feature;
performing combined decoding processing based on the encoded anomalous sample feature and the encoded prompt sample feature through at least one layer sequentially in the image anomaly detection model, to output a second combined decoding feature, and extracting a sample restoration feature for the anomalous sample image from the second combined decoding feature; and
updating parameters of the image anomaly detection model based on the sample reconstruction feature, the sample restoration feature, and the normal image feature, to obtain a trained image anomaly detection model.

13. The method according to claim 12, wherein the updating parameters of the image anomaly detection model based on the sample reconstruction feature, the sample restoration feature, and the normal image feature, to obtain a trained image anomaly detection model comprises:
determining a first sample feature difference between the sample reconstruction feature and the normal image feature, and determining a sample reconstruction loss according to the first sample feature difference;
determining a second sample feature difference between the sample restoration feature and the normal image feature, and determining a sample restoration loss according to the second sample feature difference; and
updating the parameters of the image anomaly detection model based on the sample reconstruction loss and the sample restoration loss.

14. The method according to claim 13, further comprising:
determining a third sample feature difference between the sample restoration feature and the anomalous image feature;
separately performing pixel feature extraction on the first sample feature difference and the third sample feature difference, to obtain a first pixel anomaly result and a second pixel anomaly result;
determining a pixel anomaly detection loss according to an anomalous region label carried in the anomalous sample image, the first pixel anomaly result, and the second pixel anomaly result; and
the updating the parameters of the image anomaly detection model based on the sample reconstruction loss and the sample restoration loss comprises:
fusing the sample reconstruction loss, the sample restoration loss, and the pixel anomaly detection loss, to obtain a model loss; and
updating the parameters of the image anomaly detection model based on the model loss.

15. An image anomaly detection model processing method, executable by a computer device, and the method comprising:
obtaining a normal sample image, and a reference sample image and an anomalous sample image that are associated with the normal sample image;
separately performing feature extraction on the normal sample image, the reference sample image, and the anomalous sample image, to obtain a normal image feature of the normal sample image, a reference image feature of the reference sample image, and an anomalous image feature of the anomalous sample image;
separately encoding the normal image feature, the reference image feature, and the anomalous image feature through the image anomaly detection model, to obtain an encoded normal sample feature of the normal sample image, an encoded prompt sample feature of the reference sample image, and an encoded anomalous sample feature of the anomalous sample image;
performing combined decoding processing based on the encoded normal sample feature and the encoded prompt sample feature through at least one layer sequentially in the image anomaly detection model, to output a first combined decoding feature, and extracting a sample reconstruction feature for the normal sample image from the first combined decoding feature;
performing combined decoding processing based on the encoded anomalous sample feature and the encoded prompt sample feature through at least one layer sequentially in the image anomaly detection model, to output a second combined decoding feature, and extracting a sample restoration feature for the anomalous sample image from the second combined decoding feature; and
updating parameters of the image anomaly detection model based on the sample reconstruction feature, the sample restoration feature, and the normal image feature, to obtain a trained image anomaly detection model, the trained image anomaly detection model being configured for performing image anomaly detection on an input image.

16. An image anomaly detection apparatus, comprising:
an image processing module, configured to obtain an image; extract an original image feature of the image; and encode the original image feature to obtain an encoded detection feature of the image;
a prompt feature obtaining module, configured to determine an original prompt feature from a reference image associated with the image, and encode the original prompt feature to obtain an encoded prompt feature, the reference image comprising no anomaly;
a combined decoding processing module, configured to perform combined decoding processing based on the encoded detection feature and the encoded prompt feature, through at least one layer sequentially in an image anomaly detection model, to obtain a combined decoding feature, wherein through a layer of the at least one layer, attention feature extraction is performed on an input encoded detection feature and an input encoded prompt feature, to obtain an output encoded prompt feature; and attention feature extraction is performed on the output encoded prompt feature and the input encoded detection feature, to obtain an output encoded detection feature;
a reconstruction feature obtaining module, configured to extract a reconstruction feature of the image from the combined decoding feature; and
a feature difference processing module, configured to determine a feature difference between the reconstruction feature and the original image feature to obtain an anomalous detection result of the image.

17. An image anomaly detection model processing apparatus, comprising:
a sample image obtaining module, configured to obtain a normal sample image, and a reference sample image and an anomalous sample image that are associated with the normal sample image;
a sample feature extraction module, configured to separately perform feature extraction on the normal sample image, the reference sample image, and the anomalous sample image, to obtain a normal image feature of the normal sample image, a reference image feature of the reference sample image, and an anomalous image feature of the anomalous sample image;
a sample feature encoding module, configured to separately encode the normal image feature, the reference image feature, and the anomalous image feature through the image anomaly detection model, to obtain an encoded normal sample feature of the normal sample image, an encoded prompt sample feature of the reference sample image, and an encoded anomalous sample feature of the anomalous sample image;
a normal sample reconstruction module, configured to perform combined decoding processing based on the encoded normal sample feature and the encoded prompt sample feature through at least one layer sequentially in the image anomaly detection model, to output a first combined decoding feature, and extract a sample reconstruction feature for the normal sample image from the first combined decoding feature;
an anomalous sample restoration module, configured to perform combined decoding processing based on the encoded anomalous sample feature and the encoded prompt sample feature through at least one layer sequentially in the image anomaly detection model, to output a second combined decoding feature, and extract a sample restoration feature for the anomalous sample image from the second combined decoding feature; and
a model updating module, configured to update parameters of the image anomaly detection model based on the sample reconstruction feature, the sample restoration feature, and the normal image feature, to obtain a trained image anomaly detection model, the trained image anomaly detection model being configured for performing image anomaly detection on an input image.

18. A computer device, comprising a memory and a processor, the memory having computer-readable instructions stored therein, and the processor, when executing the computer-readable instructions, implementing operations of the method according to any one of claims 1 to 15.

19. A computer-readable storage medium, having computer-readable instructions stored therein, when the computer-readable instructions being executed by a processor, operations of the method according to any one of claims 1 to 15.

20. A computer program product, comprising computer-readable instructions, the computer-readable instructions, when executed by a processor, implementing operations of the method according to any one of claims 1 to 15.
